# EUROPEAN PATENT APPLICATION

(11) **EP 4 223 658 A1**
(43) Date of publication of application: **09.08.2023**
(21) Application number: 21944054.2
(22) Date of filing: 31.05.2021
(51) Int. Cl.: B65D 30/16

(54) **SHEET MATERIAL CONTAINER**

(71) Applicant: Kao Corporation, Tokyo 103-8210 (JP)
(72) Inventor: OTSUKA, Takahiro, Tokyo 131-8501 (JP); KODAMA, Daisuke, Tokyo 131-8501 (JP)
(74) Representative: Vossius & Partner Patentanwälte Rechtsanwälte mbB
(86) International application number: PCT/JP2021/020732
(87) International publication number: WO 2022/254546

(57) **Abstract**

A sheet member container (200) is configured by including one or more sheet members including a main body-forming sheet member (21) having an outer film layer and an inner film layer. The sheet member container (200) includes: a containing portion (17); and a container main body (20) surrounds the containing portion (17). The main body-forming sheet member (21) has: a main-body sealed portion in which the outer film layer and the inner film layer are attached to each other; a non-attached region (24) in which the outer film layer and the inner film layer are partially non-attached to each other; and a filled part (60) in which a filler is enclosed between the outer film layer and the inner film layer in the non-attached region (24). The sheet member container (200) further includes a protective cover (300) composed of a film and covering an outer surface of the container main body (20).

## Description

### TECHNICAL FIELD

The present invention relates to a sheet member container and a recycling method.

### BACKGROUND ART

A sheet member container having a structure in which a plurality of films is laminated and a filler such as air is enclosed between the layers is described in, for example, Patent Document 1. The sheet member container of Patent Document 1 includes a container having a containing portion that accommodates a content, a bag covering the container, and a bag-forming sheet member forming the bag.

The bag-forming sheet member includes an attached portion where a plurality of film layers is attached to each other and a non-attached region where the plurality of film layers is partially non-attached to each other, and a filler is enclosed between the plurality of film layers in the non-attached region to form a filled part.

### CITATION LIST

Patent Document 1: JP 6193535 B2

### SUMMARY OF THE INVENTION

The present invention relates to a sheet member container configured by including one or more sheet members including a main body-forming sheet member having an outer film layer and an inner film layer laminated on each other, the sheet member container including: a containing portion that accommodates a content; and a container main body that is composed of the main body-forming sheet member and surrounds the containing portion, in which the main body-forming sheet member has: a main-body sealed portion in which the outer film layer and the inner film layer are attached to each other; a non-attached region in which the outer film layer and the inner film layer are partially non-attached to each other; and a filled part in which a filler is enclosed between the outer film layer and the inner film layer in the non-attached region, and the sheet member container further includes a protective cover composed of a film and covering an outer surface of the container main body.

The present invention also relates to a method for recycling the sheet member container of the present invention, the method including: separating the protective cover from the plurality of sheet members; washing the plurality of sheet members; manufacturing a recycled resin using the plurality of washed sheet members; washing the protective cover; and manufacturing a recycled resin using the washed protective cover.

### BRIEF DESCRIPTION OF THE DRAWINGS

Fig. 1 is a perspective view of a sheet member container of a first embodiment.
Fig. 2 is a front view of the sheet member container of the first embodiment.
Fig. 3 is a bottom view of the sheet member container of the first embodiment.
Fig. 4 is a cross-sectional view taken along line A-A in Fig. 2.
Fig. 5 is an exploded perspective view illustrating an outer film layer and an inner film layer of a main body-forming sheet member.
Fig. 6 is an exploded perspective view illustrating an inner bag-forming sheet member and the main body-forming sheet member.
Fig. 7 is a plan view illustrating a container-forming sheet member including the inner bag-forming sheet member and the main body-forming sheet member laminated on each other.
Fig. 8 is a perspective view illustrating the sheet member container of the first embodiment, illustrating a state before a filler is enclosed therein.
Fig. 9 is a perspective view illustrating the sheet member container of the first embodiment, illustrating a state where a cap part is attached thereto after a filler is enclosed therein.
Fig. 10 is a plan view illustrating a container-forming sheet member used for manufacturing a sheet member container of a second embodiment.
Figs. 11A to 11C are schematic perspective views illustrating a series of steps of manufacturing the sheet member container of the second embodiment. Fig. 11D is a schematic lateral cross-sectional view illustrating a state where a protective cover is removed from the sheet member container of the second embodiment.
Fig. 12A is a schematic side view of the sheet member container of the second embodiment, illustrating a state before a protective cover is attached thereto. Fig. 12B is a schematic side view of a sheet member container of Modified Example 1 of the second embodiment, illustrating a state before a protective cover is attached thereto. Fig. 12C is a schematic side view of a sheet member container of Modified Example 2 of the second embodiment, illustrating a state before a protective cover is attached thereto.
Figs. 13A and 13B are plan views for describing an operation of discharging a filler from a filled part of the sheet member container of the second embodiment.
Fig. 14 is a plan view illustrating a container-forming sheet member used for manufacturing a sheet member container of Modified Example 3 of the second embodiment.
Figs. 15A and 15B are views illustrating a step of manufacturing the sheet member container of Modified Example 3 of the second embodiment.
Fig. 16 is a plan view illustrating a container-forming sheet member used for manufacturing a sheet member container of Modified Example 4 of the second embodiment.
Fig. 17 is a plan view illustrating a container-forming sheet member used for manufacturing a sheet member container of Modified Example 5 of the second embodiment.
Fig. 18 is a plan view of a sheet member container of a third embodiment, illustrating a state where a cap part is not attached thereto.
Fig. 19 is a front view of the sheet member container of the third embodiment.
Fig. 20 is a bottom view of the sheet member container of the third embodiment.
Fig. 21 is a perspective view illustrating a sheet member container of a fourth embodiment, illustrating a state before a filler is enclosed therein.
Fig. 22 is a side view illustrating a sheet member container of a fifth embodiment.
Fig. 23 is a side view illustrating the sheet member container of the fifth embodiment, illustrating a state where a protective cover is not attached thereto.
Fig. 24 is a plan view illustrating a container-forming sheet member used for manufacturing the sheet member container of the fifth embodiment.
Fig. 25 is a perspective view of the sheet member container of the fifth embodiment, illustrating a state where a protective cover and a cap part are not attached thereto.
Fig. 26 is a schematic plane cross-sectional view of a sheet member container of a sixth embodiment.
Fig. 27 is a schematic plane cross-sectional view of a sheet member container of a seventh embodiment.
Fig. 28 is a side view of a sheet member container of an eighth embodiment.
Fig. 29 is a perspective view of the sheet member container of the eighth embodiment.
Fig. 30 is a schematic side cross-sectional view illustrating a part of the sheet member container of the eighth embodiment.

### DESCRIPTION OF EMBODIMENTS

According to studies of the present inventors, there is still room for improving a structural strength of the sheet member container of Patent Document 1.

The present invention relates to a sheet member container having a structure capable of achieving a better structural strength, and a method for recycling the sheet member container.

Preferred embodiments of the present invention will be described below with reference to the drawings. Note that in all the drawings, similar constituents will be given the same reference numeral or symbol so as to appropriately avoid repetitive explanation.

### [First Embodiment]

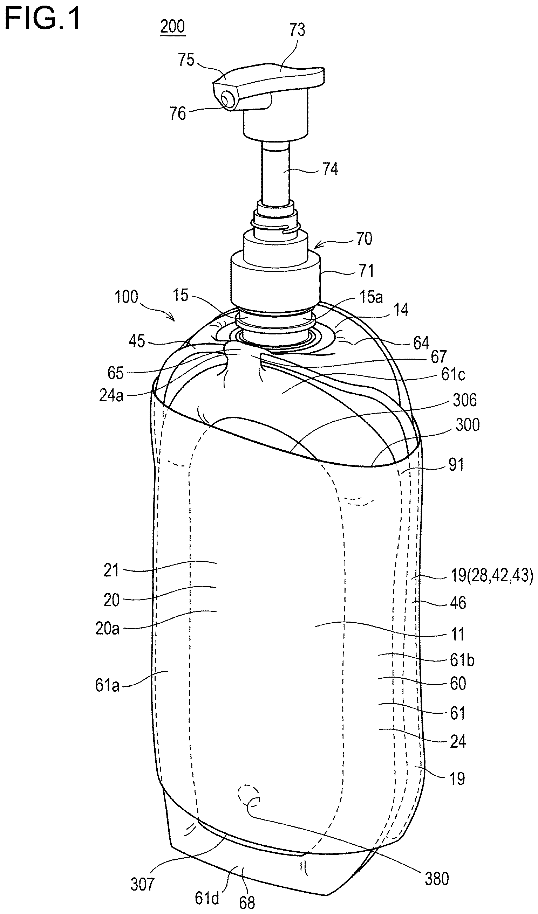

First, a first embodiment will be described with reference to Figs. 1 to 9.

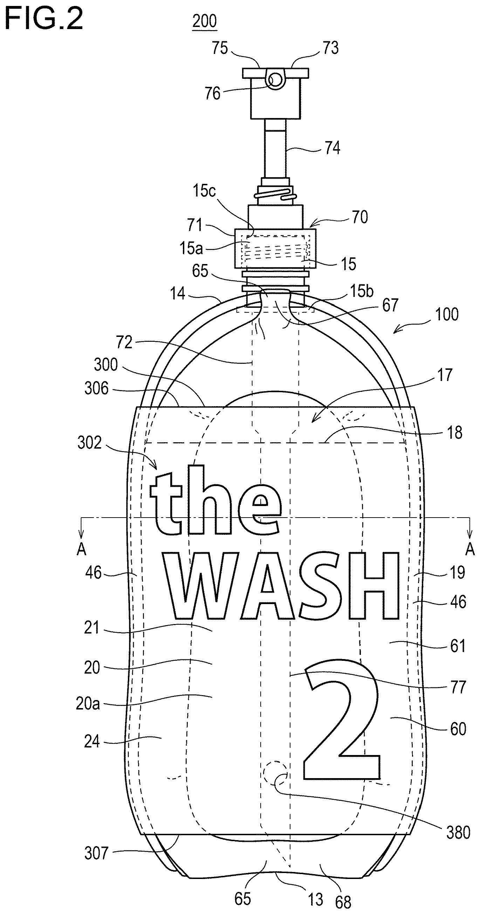

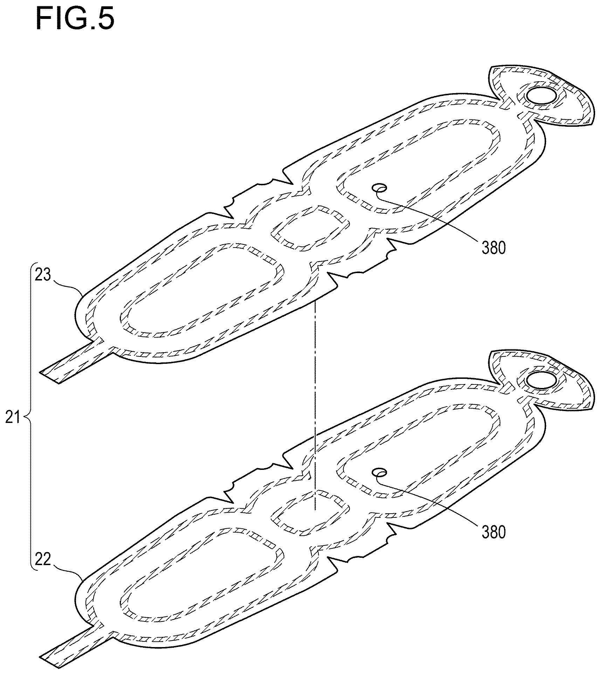

As illustrated in Figs. 1 and 2, a sheet member container 200 of this embodiment is configured by including one or more sheet members including a main body-forming sheet member 21 (see Fig. 5) having an outer film layer 22 and an inner film layer 23 laminated on each other. The sheet member container 200 includes a containing portion 17 that accommodates a content 18, and a container main body 20 that is composed of the main body-forming sheet member 21 and surrounds the containing portion 17.

The main body-forming sheet member 21 has: main-body sealed portions 26 and 28 in which the outer film layer 22 and the inner film layer 23 are attached to each other; a non-attached region 24 in which the outer film layer 22 and the inner film layer 23 are partially non-attached to each other, and a filled part 60 in which a filler is enclosed between the outer film layer 22 and the inner film layer 23 in the non-attached region 24.

The sheet member container 200 further includes a protective cover 300 composed of a film and covering an outer surface of the container main body 20.

According to this embodiment, since the sheet member container 200 includes the protective cover 300 composed of a film and covering an outer surface of the container main body 20, the container main body 20 is reinforced by the protective cover 300. As a result, it is possible to achieve a good structural strength of the sheet member container 200.

In addition, since the sheet member container 200 has a structure reinforced by the filled part 60, the protective cover 300 can be stably attached to the sheet member container 200, and twisting or the like of the protective cover 300 can be suppressed as compared with a general soft packaging container not having the filled part 60.

Hereinafter, the sheet member container 200 will be described in more detail.

Note that the sheet member container 200 includes the protective cover 300 and a part of the sheet member container 200 excluding the protective cover 300. In the following description, the part of the sheet member container 200 excluding the protective cover 300 is referred to as a sheet member container 100.

Types of the content 18 are not specifically limited in the present invention. Examples of the content 18 include shampoo, hair rinse, body soap, a detergent, a bleaching agent, a softener, beverage, food, engine oil, and chemicals.

The content 18 may be a liquid (including a paste), or may be a solid (for example, a particle (including a granule) or a powder).

In this embodiment, the content 18 is, for example, a liquid.

When the content 18 is a liquid, for example, at 30°C, the viscosity of the content 18 is preferably equal to or more than 1 mPa·s and equal to or less than 120,000 mPa·s (measured with a B-type viscometer, for example, measured with viscometer TV-10 or viscometer TVB-10 manufactured by Toki Sangyo Co., Ltd.), and more preferably equal to or more than 1 mPa·s and equal to or less than 60,000 mPa.s.

In this embodiment, the container main body 20 is formed in a bag shape having a trunk 11, a top gusset 14 disposed on an upper side of the trunk 11, and a bottom gusset 13 disposed on a lower side of the trunk 11. However, the present invention is not limited to this example, and the container main body 20 does not have to have the top gusset 14, and does not have to have the bottom gusset 13.

The container main body 20 surrounds the containing portion 17. In this embodiment, the container main body 20 surrounds an inner bag 40. That is, in this embodiment, the sheet member container 200 includes the inner bag 40 disposed inside the container main body 20, and the inner bag 40 has the containing portion 17. The inner bag 40 is composed of an inner bag-forming sheet member 41 which is an innermost layer sheet member among the one or more sheet members.

The container main body 20 forms an outer shell of the sheet member container 100. Hereinafter, the trunk 11, the top gusset 14, and the bottom gusset 13 of the container main body 20 may be referred to as the trunk 11, the top gusset 14, and the bottom gusset 13 of the sheet member container 200.

The sheet member container 200 can stand in a self-standing manner in a state where the bottom gusset 13 is placed on a horizontal placement face.

In this embodiment, explanations on positional relations (vertical relation and the like) of the individual constituents of the sheet member container 200 are made assuming that the sheet member container 200 stands in a self-standing manner as illustrated in Figs. 1 and 2 unless otherwise specifically stated. However, the positional relations described here not always coincide with positional relations when the sheet member container 200 is used or manufactured.

In addition, for the positional relations among the constituents of the sheet member container 200, the positional relations indicated in the drawings may be described.

A front side of the sheet member container 200 (this side of the paper surface in Fig. 2) is referred to as a front side, a back side of the sheet member container 200 (far side of the paper surface in Fig. 2) is referred to as a rear side, a left side of the sheet member container 200 when viewed from the front surface (left side in Fig. 2) is referred to as a left side, and a right side of the sheet member container 200 when viewed from the front surface (right side in Fig. 2) is referred to as a right side. A left-right direction of the sheet member container 200 may be referred to as a lateral width direction.

The front shape of the trunk 11 is not particularly limited, but in this embodiment, for example, as illustrated in Fig. 2, the trunk 11 has a longitudinally long shape with a substantially constant lateral width size, and an upper edge of the trunk 11 is formed in an arc shape protruding upward.

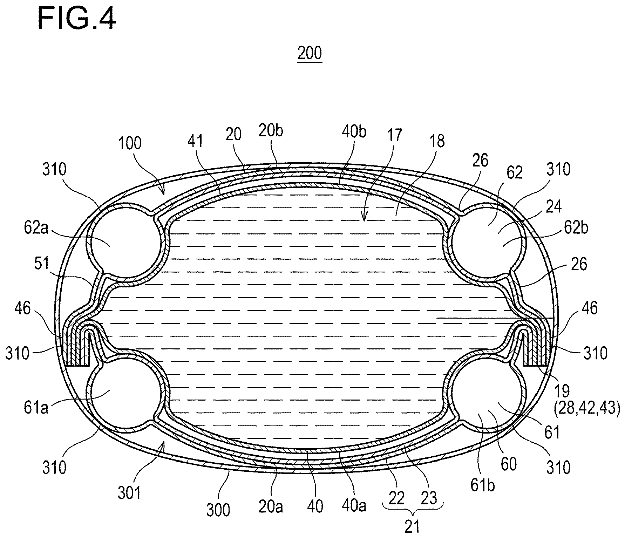

As illustrated in Fig. 4, the trunk 11 has a first main surface part 20a (front panel) and a second main surface part 20b (rear panel) facing each other with the containing portion 17 interposed therebetween. The first main surface part 20a is located on a front side, and the second main surface part 20b is located on a back side.

The first main surface part 20a is formed symmetrically in the left-right direction, for example, and the second main surface part 20b is also formed symmetrically in the left-right direction, for example. The first main surface part 20a and the second main surface part 20b are formed symmetrically in the front-rear direction except for, for example, a connection part 65 described later of the filled part 60.

The first main surface part 20a bulges out forward, and the second main surface part 20b bulges out rearward. However, the first main surface part 20a and the second main surface part 20b may be substantially flat without bulging out.

The top gusset 14 connects an upper edge of the first main surface part 20a and an upper edge of the second main surface part 20b to each other. The top gusset 14 has a discharge port that discharges the content 18 from the containing portion 17.

The bottom gusset 13 connects a lower edge of the first main surface part 20a and a lower edge of the second main surface part 20b to each other.

A left peripheral part of the first main surface part 20a and a left peripheral part of the second main surface part 20b are connected to each other, and a right peripheral part of the first main surface part 20a and a right peripheral part of the second main surface part 20b are connected to each other.

The planar shape of the top gusset 14 is not particularly limited, but in this embodiment, the top gusset 14 is formed in a shape in which a front-rear width decreases from the central part toward the left in the lateral width direction and the front-rear width decreases from the central part toward the right in the lateral width direction. The top gusset 14 is formed in, for example, a laterally long tonsil shape.

The container main body 20 includes a gusset part circumferential sealed piece 45 disposed along a periphery of the top gusset 14, and a pair of side part sealed pieces 46 extending vertically along left and right peripheral parts of the trunk 11 and each including an attached part between the circumferential part of the first main surface part 20a and the circumferential part of the second main surface part 20b. The gusset part circumferential sealed piece 45 and the side part sealed piece 46 stand, for example, toward the outside of the container main body 20. The sizes of the gusset part circumferential sealed piece 45 and the side part sealed piece 46 in a direction orthogonal to the extending direction of the gusset part circumferential sealed piece 45 and the side part sealed piece 46 (width sizes of the gusset part circumferential sealed piece 45 and the side part sealed piece 46) are, for example, substantially constant.

The gusset part circumferential sealed piece 45 surrounds the top gusset 14 in a circumferential shape except for, for example, a part where the connection part 65 described later is present.

The gusset part circumferential sealed piece 45 and the side part sealed piece 46 each include a main-body sealed portion 26 that attaches the outer film layer 22 and the inner film layer 23 to each other.

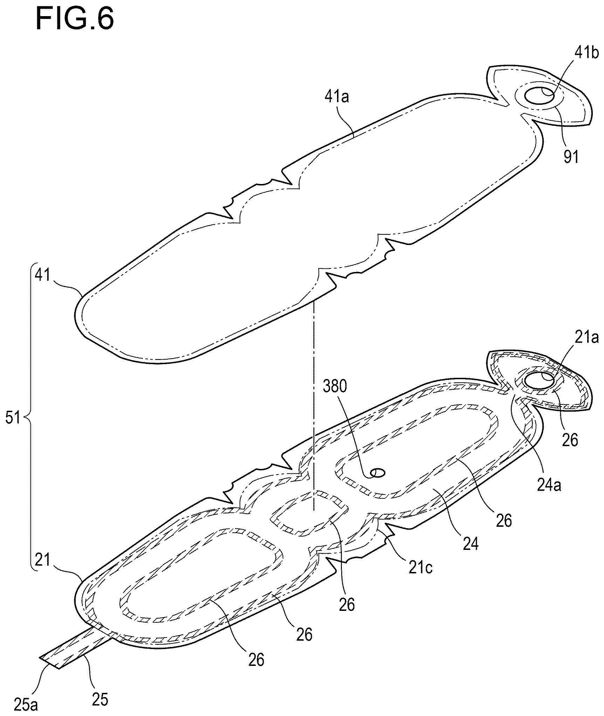

The container main body 20 is configured by folding the main body-forming sheet member 21 (see Figs. 5 and 6) and attaching parts of a circumferential part of the main body-forming sheet member 21 to each other (they are attached to each other through the inner bag-forming sheet member 41 forming the inner bag 40 in this embodiment).

In this embodiment, the inner bag 40 is configured by attaching parts of a circumferential part of the inner bag-forming sheet member 41 (see Fig. 6) to each other (see Fig. 4). That is, the bag-shaped inner bag 40 is configured by folding the inner bag-forming sheet member 41 and attaching circumferential parts of the inner bag-forming sheet member 41 to each other. The inner bag 40 is covered with the container main body 20. The inner bag 40 has the containing portion 17 inside the inner bag 40.

However, in the present invention, when an inner container defining the containing portion 17 is disposed inside the container main body 20, the inner container is not limited to the inner bag 40 composed of a sheet member, but may be formed by blow molding.

The shape of the inner bag 40 is not particularly limited, but in this embodiment, the inner bag 40 is formed in a similar shape to the container main body 20.

As illustrated in Fig. 4, the inner bag 40 has a first main surface part 40a located on a front side and a second main surface part 40b located on a back side with the containing portion 17 interposed therebetween.

The sheet member container 200 includes, for example, a spout 15 disposed in the top gusset 14 (top part) and a cap part 70 attached (for example, detachably attached) to the spout 15. The spout 15 penetrates the top gusset 14.

More specifically, for example, as illustrated in Fig. 2, the spout 15 has a cylinder part 15a having a pouring outlet 15c, and a flange part 15b protruding outward from a base end of the cylinder part 15a. The cylinder part 15a has a cylindrical form. A screw thread is formed on an outer circumferential surface of the cylinder part 15a, and the cylinder part 15a has a male screw shape. The cylinder part 15a vertically penetrates the top gusset 14 and protrudes upward from the top gusset 14. The flange part 15b is disposed at one end (lower end) of the cylinder part 15a in an axial direction thereof so as to be orthogonal to the axial direction.

The flange part 15b is disposed, for example, on an inner surface or an outer surface of a part of the inner bag-forming sheet member 41 disposed along the top gusset 14 of the trunk 11. A lower surface of the flange part 15b is attached to an inner surface of the inner bag-forming sheet member 41 at the top gusset 14, for example. However, the present invention is not limited to this example, and the flange part 15b may be directly attached to the inner film layer 23 of the main body-forming sheet member 21.

An opening at a tip of the cylinder part 15a is the pouring outlet 15c that discharges the content 18 from the containing portion 17.

The cap part 70 includes, for example, an attachment part 71 which is a female screw-shaped cylindrical part detachably screwed to the cylinder part 15a, a pump part 72 fixed to the attachment part 71, a dip tube 77 extending downward from the pump part 72, and a head part 73 held by the pump part 72 so as to be movable up and down with respect to the pump part 72.

The head part 73 has, for example, a support cylinder part 74 protruding upward from the pump part 72 and a nozzle part 75 horizontally protruding from an upper end of the head part 73, and a discharge port 76 that discharges the content 18 is formed at a tip of the nozzle part 75.

A flow path (not illustrated) of the content 18 in the cap part 70 is disposed so as to vertically penetrate the spout 15.

When the head part 73 is pressed (pushed down) into the pump part 72, the content 18 is discharged from the discharge port 76 by a function of the pump part 72.

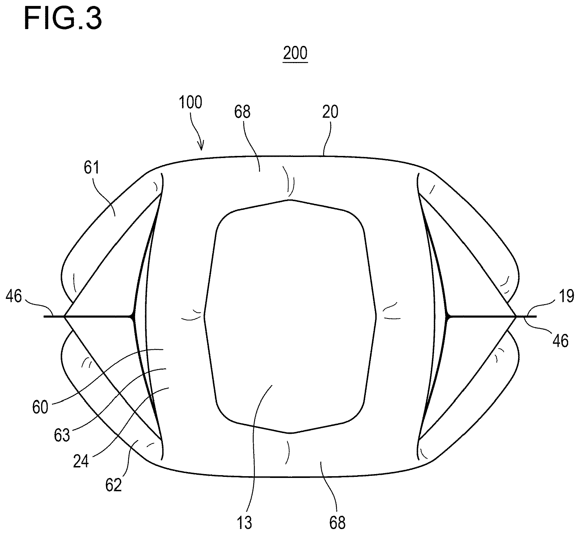

In this embodiment, as illustrated in Figs. 1 to 4, for example, the filled part 60 includes a first main surface part side filled part 61 formed in a circumferential shape along a circumferential part of the first main surface part 20a, a second main surface part side filled part 62 formed in a circumferential shape along a circumferential part of the second main surface part 20b, a bottom part filled part 63 (Fig. 3) formed in a circumferential shape along a circumferential part of the bottom gusset 13, and a gusset part filled part 64 formed in a circumferential shape around the cylinder part 15a in the top gusset 14.

A lower edge of the first main surface part side filled part 61 is connected to a front edge of the bottom part filled part 63, and a lower edge of the second main surface part side filled part 62 is connected to a rear edge of the bottom part filled part 63. That is, the filled part 60 is disposed across the trunk 11 and the bottom gusset 13 (formed continuously from the first main surface part side filled part 61 to the bottom part filled part 63, and formed continuously from the second main surface part side filled part 62 to the bottom part filled part 63). The central part of an upper end of the first main surface part side filled part 61 in the lateral width direction is connected to the central part of a front end of the gusset part filled part 64 in the lateral width direction. That is, the filled part 60 is disposed across the trunk 11 and the top gusset 14 (continuously formed from the first main surface part side filled part 61 to the gusset part filled part 64).

Since the sheet member container 200 includes the filled part 60 having such a structure, the structural strength of substantially the entire container main body 20 is sufficiently ensured.

In this embodiment, the entire filled part 60 is integrally formed. The first main surface part side filled part 61 and the gusset part filled part 64 communicate with each other through the connection part 65.

Note that in the present invention, the sheet member container 200 may include a plurality of filled parts 60 independent of each other.

More specifically, the first main surface part side filled part 61 includes, for example, a vertically extending part 61a extending vertically along a left peripheral part of the trunk 11, a vertically extending part 61b extending vertically along a right peripheral part of the trunk 11, an upper horizontally extending part 61c connecting an upper end of the vertically extending part 61a and an upper end of the vertically extending part 61b to each other, and a lower horizontally extending part 61d connecting a lower end of the vertically extending part 61a and a lower end of the vertically extending part 61b to each other.

As illustrated in Fig. 4, the vertically extending parts 61a and 61b extend vertically at corners in a lateral cross section of the trunk 11.

The upper horizontally extending part 61c is disposed at an upper end of the first main surface part 20a and extends in a direction having a component in the horizontal direction. More specifically, for example, the upper horizontally extending part 61c extends in, for example, an upward protruding arc shape.

The lower horizontally extending part 61d is disposed at a lower end of the first main surface part 20a, and extends substantially horizontally to the left and right, for example.

As described above, the filled part 60 includes the upper horizontally extending part 61c extending horizontally in an upper part of the trunk 11 and the lower horizontally extending part 61d extending horizontally in a lower part of the trunk 11.

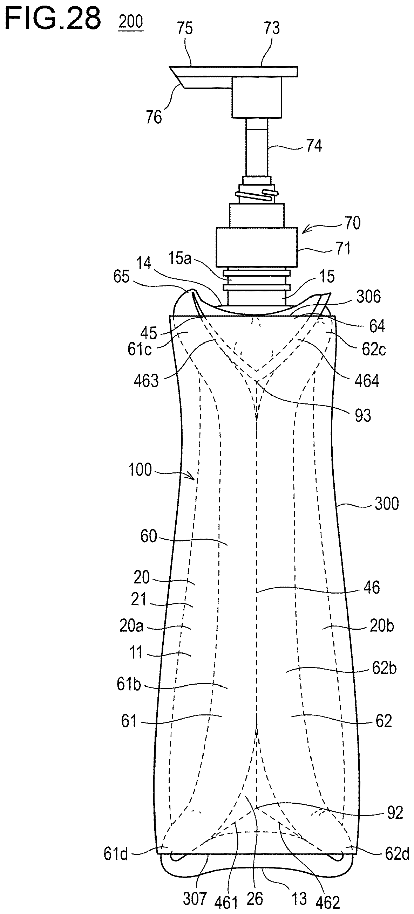

The second main surface part side filled part 62 is, for example, formed symmetrically in the front-rear direction with the first main surface part side filled part 61, and includes a vertically extending part 62a extending vertically along a left peripheral part of the trunk 11, a vertically extending part 62b extending vertically along a right peripheral part of the trunk 11, an upper horizontally extending part 62c (see Fig. 28) connecting an upper end of the vertically extending part 62a and an upper end of the vertically extending part 62b to each other, and a lower horizontally extending part 62d (see Fig. 28) connecting a lower end of the vertically extending part 62a and a lower end of the vertically extending part 62b to each other.

As illustrated in Figs. 5 and 6, the main body-forming sheet member 21 is configured by laminating and attaching the outer film layer 22 forming an outer surface side of the container main body 20 and the inner film layer 23 forming an inner surface side of the container main body 20 on/to each other. That is, as an example, in this embodiment, the main body-forming sheet member 21 includes two film layers of the outer film layer 22 and the inner film layer 23. However, the present invention is not limited to this example, and the main body-forming sheet member 21 may have a film layer other than the outer film layer 22 and the inner film layer 23.

In this embodiment, the outer film layer 22 and the inner film layer 23 are formed in the same shape. However, the present invention is not limited to this example, and the outer film layer 22 and the inner film layer 23 may have different shapes from each other. When the outer film layer 22 and the inner film layer 23 have different shapes from each other, the outer film layer 22 preferably has a larger shape than the inner film layer 23.

An insertion hole into which the cylinder part 15a of the spout 15 is inserted is formed in each of the outer film layer 22 and the inner film layer 23.

In the main body-forming sheet member 21, the non-attached region 24 (Fig. 6) in which the outer film layer 22 and the inner film layer 23 are partially non-attached is formed. For example, in one or both of the outer film layer 22 and the inner film layer 23, a surface facing the other is partially subjected to a non-attachment treatment. The non-attachment treatment can be easily performed by applying a non-attaching agent (so-called adhesion inhibitor) to a surface to put the surface in an adhesion inhibited state. As the adhesion inhibitor, any agent can be used as long as the agent can inhibit attachment between the outer film layer 22 and the inner film layer 23. As the adhesion inhibitor, for example, printing inks used for offset printing, flexographic printing, and letterpress printing, a medium ink, and an ink dedicated to adhesion inhibition can be preferably used. A thermosetting or UV-curable ink can be preferably used. A range in which the non-attachment treatment is performed is the non-attached region 24. A filler is enclosed in the non-attached region 24 to form the filled part 60 in which the filler is enclosed.

The filler may be a fluid (a gas or a liquid), a solid (for example, a particulate or a resin pellet) or a semi-solid (for example, a foam material), and is preferably a gas such as air.

The filled part 60 is not necessarily limited to being formed in each of the non-attached regions 24, and may be formed in some of the plurality of non-attached regions 24.

In Fig. 5, in each of the outer film layer 22 and the inner film layer 23, an area where the outer film layer 22 and the inner film layer 23 are attached to each other to form the main-body sealed portion 26 (Fig. 6) is indicated by right-upward hatching for convenience.

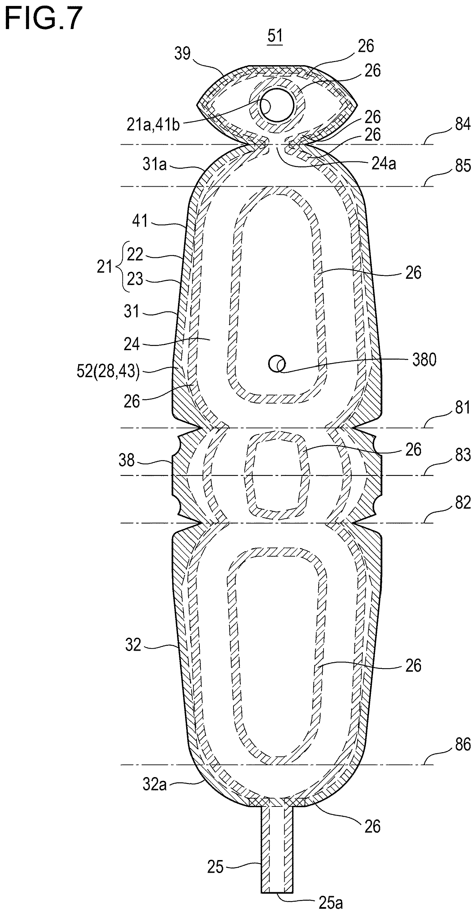

In Figs. 6 and 7, in the main body-forming sheet member 21, an area where the outer film layer 22 and the inner film layer 23 are attached to each other in order to define the non-attached region 24, that is, an area where the main-body sealed portion 26 is formed is indicated by right-upward hatching for convenience.

Furthermore, in Fig. 6, a seal boundary line 21c which is a boundary line between a sealed area of a circumferential part of the main body-forming sheet member 21 and the other area is indicated by a two-dot chain line. In this embodiment, in an area outside the seal boundary line 21c of the main body-forming sheet member 21, the outer film layer 22 and the inner film layer 23 are attached to each other, and the inner film layer 23 and the inner bag-forming sheet member 41 are attached to each other when a bag is manufactured.

As a method for attaching the outer film layer 22 and the inner film layer 23, for example, heat sealing, ultrasonic sealing, and attachment with an adhesive can be used.

In this embodiment, each of the outer film layer 22 and the inner film layer 23 has a layer structure including a plurality of resin layers. The inner bag-forming sheet member 41 also has a layer structure including a plurality of resin layers.

The main body-forming sheet member 21 preferably includes any one of polyethylene-based, polypropylene-based, polyester-based, and polyamide-based resin layers.

A material of the resin layer forming the outer film layer 22 and the inner film layer 23 of the main body-forming sheet member 21 is not particularly limited, but is preferably any one of a polyethylene-based material such as high-density polyethylene (HDPE), medium-density polyethylene (MDPE), low-density polyethylene (LDPE), linear low-density polyethylene (LLDPE), ultra-low-density polyethylene (ULDPE), or an ethylene-vinyl alcohol copolymer (EVOH); a polypropylene-based material such as oriented polypropylene (OPP), non-oriented polypropylene (CPP), isotactic PP, syndiotactic PP, atactic PP, random PP, or block PP; a polyester-based material such as polyethylene terephthalate (PET), amorphous polyethylene terephthalate (amorphous PET), polybutylene terephthalate (PBT), polyethylene naphthalate (PEN), or polybutylene naphthalate (PBN); and a polyamide-based material such as oriented nylon (ONy), non-oriented nylon (CNy), nylon 6, nylon 66, nylon 11, nylon 12, or MXD6, and particularly preferably the polyethylene-based material among these materials.

As an example, the outer film layer 22 has a fourlayer structure formed by laminating four resin layers of a first layer, a second layer, a third layer, and a fourth layer in this order.

Among these layers, the first layer forms an outer surface of the container main body 20. The first layer is, for example, composed of polyethylene terephthalate (PET) or oriented nylon (ONy). Examples of a major function of the first layer include imparting glossiness and printability to the container main body 20 and ensuring rigidity of the container main body 20.

The second layer is, for example, a transparent vapor-deposited PET layer in which silica and/or alumina is vapor-deposited on a surface on the side of the first layer in the second layer and which is composed of polyethylene terephthalate. Examples of a major function of the second layer include imparting a gas barrier property to the container main body 20.

The third layer is, for example, composed of oriented nylon. Examples of a major function of the third layer include ensuring pinhole resistance of the container main body 20.

The fourth layer is, for example, composed of linear low-density polyethylene (LLDPE). Examples of a major function of the fourth layer include ensuring heat sealability with the inner film layer 23.

Examples of the layer structure of the inner film layer 23 include a structure including a fifth layer composed of, for example, linear low-density polyethylene (LLDPE) in addition to a similar layer structure to the first layer to the fourth layer of the outer film layer 22. The fifth layer is adjacent to the first layer and forms a surface of the inner film layer 23 opposite to the fourth layer. Examples of a major function of the fifth layer include ensuring heat sealability with the outer film layer 22.

Examples of a major function of the fourth layer of the inner film layer 23 include ensuring heat sealability with the inner bag-forming sheet member 41.

As an example, the inner bag-forming sheet member 41 forming the inner bag 40 has a three-layer structure formed by laminating a first layer, a second layer, and a third layer in this order.

Among these layers, the first layer is, for example, composed of linear low-density polyethylene. Examples of a major function of the first layer include ensuring heat sealability with the main body-forming sheet member 21 (heat sealability with the inner film layer 23).

The second layer is, for example, a transparent vapor-deposited oriented nylon layer in which silica and/or alumina is vapor-deposited on a surface on the side of the first layer in the second layer and which is composed of oriented nylon. Examples of a major function of the second layer include ensuring a gas barrier property and pinhole resistance.

The third layer is, for example, composed of linear low-density polyethylene. Examples of a major function of the third layer include ensuring heat sealability with the inner bag-forming sheet member 41.

Preferably, the outer film layer 22 is composed of the same kind of single-kind resin material as the inner film layer 23, and furthermore, more preferably, the inner bag-forming sheet member 41 is also composed of the same kind of single-kind resin material as the outer film layer 22 and the inner film layer 23 from a viewpoint of recyclability. The outer film layer 22, the inner film layer 23, and the inner bag-forming sheet member 41 are each particularly more preferably composed of a polyethylene-based resin layer.

In this case, the outer film layer 22 may include three layers of linear low-density polyethylene (LLDPE), an ethylene-vinyl alcohol copolymer (EVOH), and linear low-density polyethylene (LLDPE) in this order from an outer surface side of the container.

In this case, the inner film layer 23 and the inner bag-forming sheet member 41 may each have the same layer configuration as the outer film layer 22.

Alternatively, the outer film layer 22 may include four layers of biaxially oriented polyethylene (BOPE), linear low-density polyethylene (LLDPE), an ethylene-vinyl alcohol copolymer (EVOH), and linear low-density polyethylene (LLDPE) in this order from an outer surface side of the container.

In this case, the inner film layer 23 and the inner bag-forming sheet member 41 may each include three layers of linear low-density polyethylene (LLDPE), an ethylene-vinyl alcohol copolymer (EVOH), and linear low-density polyethylene (LLDPE).

Alternatively, the outer film layer 22 may include two layers of biaxially oriented polyethylene (BOPE) and linear low-density polyethylene (LLDPE) in this order from an outer surface side of the container, and may have a coating type gas barrier layer as an outermost layer. The coating type gas barrier layer is a coating layer formed by applying a material having a gas barrier property, and a vapor-deposited layer formed by vapor-depositing metal, silica, or the like is not included in the coating type gas barrier layer. That is, the coating type gas barrier layer is limited to a coating layer formed by applying a material having a gas barrier property. The material having a gas barrier property is not particularly limited as long as the material can form a coating layer by coating, and suitable examples thereof include polyvinylidene chloride, an ethylene-vinyl alcohol copolymer (EVOH), an organic (ethylene-vinyl alcohol copolymer resin (EVOH)-based)/inorganic (plate-shaped filler) nanocomposite type material, an organic (vinyl acetate (VA)-based)/inorganic (siloxane polymer) hybrid type material, polyvinyl alcohol (PVOH), a copolymer of polyvinyl alcohol (PVOH), acrylic acid, and methyl methacrylate, and hydroxypolyurethane. In particular, it is more preferable to use one having high coatability (adhesion when coated) to a base material layer and/or one that can be desorbed from the base material layer by treatment with alkaline water, warm water, an organic solvent, or the like.

In this case, the inner film layer 23 may include two layers of linear low-density polyethylene (LLDPE) and high-density polyethylene (HDPE) in this order from an outer surface side of the container, and may have the coating type gas barrier layer as an innermost layer.

In this case, the inner bag-forming sheet member 41 may include two layers of linear high-density polyethylene (HDPE) and linear low-density polyethylene (LLDPE) in this order from an outer surface side of the container, and may have the coating type gas barrier layer as an outermost layer.

Alternatively, the outer film layer 22 may include two layers of high-density polyethylene (HDPE) and linear low-density polyethylene (LLDPE) in this order from an outer surface side of the container, and may have the coating type gas barrier layer as an intermediate layer.

In this case, the inner film layer 23 may include two layers of linear low-density polyethylene (LLDPE) and high-density polyethylene (HDPE) in this order from an outer surface side of the container, and may have the coating type gas barrier layer as an intermediate layer.

In this case, the inner bag-forming sheet member 41 may have the same layer configuration as the outer film layer 22.

However, the layer structures of the outer film layer 22 and the inner film layer 23 are not limited to the above examples, and a material of each layer forming the outer film layer 22 and the inner film layer 23 is not limited to the above examples.

The layer structure of inner bag-forming sheet member 41 is not limited to the above examples.

As illustrated in Figs. 6 and 7, the inner bag-forming sheet member 41 is laminated on the main body-forming sheet member 21. As illustrated in Fig. 7, a circumferential part of the inner film layer 23 and a circumferential part of the inner bag-forming sheet member 41 are attached to each other, and a circumferential part of the outer film layer 22 and a circumferential part of the inner film layer 23 are attached to each other. As a result, the main body-forming sheet member 21 and the inner bag-forming sheet member 41 form a container-forming sheet member 51.

Here, a sealed portion of a circumferential part of the container-forming sheet member 51 is referred to as a circumferential sealed portion 52. The circumferential sealed portion 52 includes a sealed portion (hereinafter, referred to as an interior/exterior sealed portion 43) between the circumferential part of the inner film layer 23 and the circumferential part of the inner bag-forming sheet member 41, and a sealed portion (hereinafter, referred to as a main-body sealed portion 28) between the circumferential part of the outer film layer 22 and the circumferential part of the inner film layer 23. The gusset part circumferential sealed piece 45 is formed in a part of an area where the main-body sealed portion 28 is formed, and the side part sealed piece 46 is formed in another part.

As described above, the sheet member container 200 has the circumferential sealed portion 52 in which circumferential parts of the one or more sheet members are attached to each other, and the circumferential sealed portion 52 includes the side part sealed piece 46 extending along each of a pair of side edges of the trunk 11.

In Fig. 7, an area where the circumferential sealed portion 52 is formed is indicated by left-upward hatching. In addition, in Fig. 7, in an area where the area where the circumferential sealed portion 52 is formed and the area where the main-body sealed portion 26 is formed overlap each other, left-upward hatching and right-upward hatching overlap each other.

As a method for forming the circumferential sealed portion 52, for example, heat sealing, ultrasonic sealing, and attachment with an adhesive can be used.

As illustrated in Fig. 7, the main body-forming sheet member 21 has, for example, a first main surface part-forming sheet part 31 which is a part forming the first main surface part 20a, a second main surface part-forming sheet part 32 which is a part forming the second main surface part 20b, a bottom gusset-forming sheet part 38 (gusset part-forming sheet part) which is a part forming the bottom gusset 13, a top gusset-forming sheet part 39 (gusset part-forming sheet part) which is a part forming the top gusset 14, and a tubular extending part 25. For example, the extending part 25 extends outward from the second main surface part-forming sheet part 32.

An insertion hole 21a into which the cylinder part 15a of the spout 15 is inserted is formed in the top gusset-forming sheet part 39.

In this embodiment, the non-attached region 24 is formed in a shape corresponding to the shape of the filled part 60 of the sheet member container 200.

In the non-attached region 24, a part to be the gusset part filled part 64 is formed in a circumferential shape surrounding the insertion hole 21a.

In this embodiment, the inner bag-forming sheet member 41 is formed in the same shape as a part of the main body-forming sheet member 21 excluding the extending part 25.

Note that in Fig. 6, a seal boundary line 41a of the inner bag-forming sheet member 41 is indicated by a two-dot chain line for convenience. The seal boundary line 41a is a boundary line between an area where the inner bag-forming sheet member 41 is attached (sealed) to the main body-forming sheet member 21 and another area in the inner bag-forming sheet member 41, and is a boundary line between an area where the inner bag-forming sheet member 41 is attached to each other when the sheet member container 200 is formed using the container-forming sheet member 51 and another area in the inner bag-forming sheet member 41.

In this embodiment, the position of the seal boundary line 41a and the position of the seal boundary line 21c correspond to each other (overlap each other).

An insertion hole 41b into which the cylinder part 15a of the spout 15 is inserted is formed in a part of the inner bag-forming sheet member 41 overlapping the top gusset-forming sheet part 39.

The flange part 15b of the spout 15 is attached to, for example, an inner surface of a part of the inner bag-forming sheet member 41 overlapping the top gusset-forming sheet part 39. The cylinder part 15a protrudes through the insertion hole 41b of the inner bag-forming sheet member 41 and the insertion hole 21a of the top gusset-forming sheet part 39 toward outer surface side of these sheets.

In a state where the container-forming sheet member 51 is valley-folded at a folding line 81, a folding line 82, and a folding line 84 illustrated in Fig. 7, and is mountain-folded at a folding line 83 and a folding line 85, the circumferential parts (circumferential sealed portions 52) (inner bag-forming sheet member 41) of the container-forming sheet member 51 are attached to each other, and the container-forming sheet member 51 is thereby formed in a bag shape having a double structure. Here, the valley folding means a folding manner to fold the sheet such that the sheet protrudes toward the far side in Fig. 7, whereas the mountain folding means a folding manner to fold the sheet such that the sheet protrudes toward this side in Fig. 7.

That is, by attaching the edges of the inner bag-forming sheet member 41 to each other to form an inner bag sealed portion 42 (see Fig. 1), the inner bag 40 is formed by the inner bag-forming sheet member 41, and the bag-shaped container main body 20 covering the inner bag 40 is formed.

As a method for attaching the inner bag-forming sheet member 41 to each other, for example, heat sealing, ultrasonic sealing, and attachment with an adhesive can be used.

In this embodiment, the main-body sealed portion 28, the inner bag sealed portion 42, and the interior/exterior sealed portion 43 are disposed at positions corresponding to each other (positions overlapping each other). The main-body sealed portion 28, the inner bag sealed portion 42, and the interior/exterior sealed portion 43 are collectively referred to as a circumferential sealed portion 19 (the circumferential sealed portion 19 includes the main-body sealed portion 28, the inner bag sealed portion 42, and the inner/outer seal part 43).

Therefore, in this embodiment, the gusset part circumferential sealed piece 45 and the side part sealed piece 46 each include the main-body sealed portion 28, the inner bag sealed portion 42, and the interior/exterior sealed portion 43.

However, the present invention is not limited to this example, and the gusset part circumferential sealed piece 45 and the side part sealed piece 46 may each formed of the main-body sealed portion 28 alone.

In the first main surface part-forming sheet part 31, a part closer to the top gusset-forming sheet part 39 than the folding line 85 is a first overlapping part 31a. The first overlapping part 31a overlaps one half of the top gusset-forming sheet part 39 in a state before a filler is filled into the non-attached region 24.

In the second main surface part-forming sheet part 32, a part located farther from the bottom gusset-forming sheet part 38 than the folding line 86 is a second overlapping part 32a. The second overlapping part 32a overlaps the other half of the top gusset-forming sheet part 39 in a state before a filler is filled into the non-attached region 24.

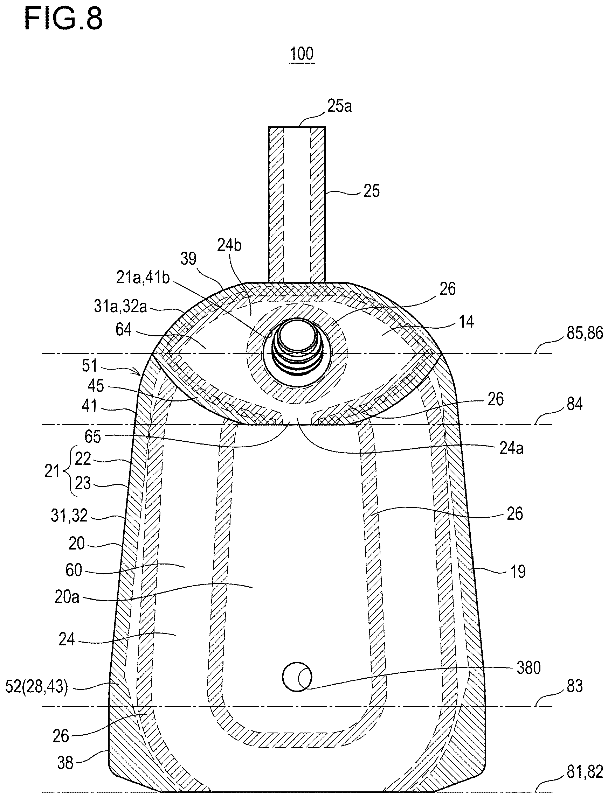

Thus, as illustrated in Fig. 8, the container-forming sheet member 51 is formed in a double bag shape to obtain the sheet member container 100 (before a filler is filled). In the sheet member container 100, for example, a filler is injected into the non-attached region 24 from an injection port 25a formed in the extending part 25, and then the non-attached region 24 is sealed at a proximal end of the extending part 25. As a result, the filler is enclosed in the non-attached region 24 (filled part 60) to form the sheet member container 100 having a three-dimensional shape.

Note that a pressure inside the filled part 60 is not particularly limited, but is preferably higher than the atmospheric pressure, and can be, for example, equal to or more than 10 kPa and equal to or less than 500 kPa (gauge pressure).

After the filled part 60 in which the filler is enclosed is formed, for example, the extending part 25 is cut off.

Thus, the sheet member container 100 in which the filler is enclosed in the filled part 60 is obtained. However, the extending part 25 may remain even in the state where the filler is enclosed in the sheet member container 100.

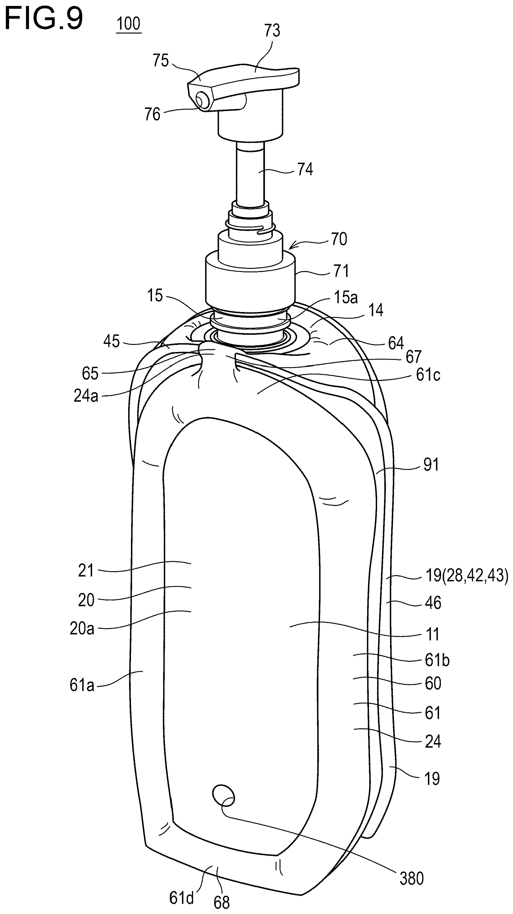

After the sheet member container 100 is manufactured, the content 18 is filled into the containing portion 17 through the cylinder part 15a of the spout 15, and then the cap part 70 is attached to the spout 15 to obtain the sheet member container 100 (Fig. 9) in which the content 18 is enclosed in the containing portion 17.

Here, a timing at which the protective cover 300 is attached to the sheet member container 100 may be before the content 18 is filled, after the content 18 is filled, before the cap part 70 is attached to the spout 15, or after the cap part 70 is attached to the spout 15.

The protective cover 300 is, for example, a shrink label, a wound label, or a stretch label.

When the protective cover 300 is a shrink label, a shrink label formed in a cylindrical shape in advance is put over the trunk 11 of the sheet member container 100, and then the shrink label is contracted to attach the shrink label to the trunk 11 in close contact with the trunk 11.

When the protective cover 300 is a wound label, a wound label is wound around the trunk 11 of the sheet member container 100, and one end and the other end of the wound label are stuck on each other with an adhesive to attach the wound label to the trunk 11 in close contact with the trunk 11.

When the protective cover 300 is a stretch label, a stretch label formed in a cylindrical shape in advance is put over the trunk 11 of the sheet member container 100, and the stretch label is thereby attached to the trunk 11 in close contact with the trunk 11 due to stretchability (rubber elasticity) of the stretch label.

A material of the protective cover 300 is not particularly limited. However, when the protective cover 300 is a shrink label, the protective cover 300 is preferably composed of a resin layer of a single material selected from polyethylene terephthalate (PET), oriented polypropylene (OPP), biaxially oriented polystyrene (OPS), and low-density polyethylene (LDPE).

When the protective cover 300 is a wound label, the protective cover 300 is preferably composed of a polypropylene resin layer.

When the protective cover 300 is a stretch label, the protective cover 300 is preferably composed of a resin layer of linear low-density polyethylene (LLDPE).

Each resin layer may be composed of a recycled resin.

In this embodiment, the protective cover 300 is wound around the entire circumference of the trunk 11. As a result, a structure in which the container main body 20 is more sufficiently reinforced by the protective cover 300 can achieve

The protective cover 300 is attached to the sheet member container 100 so as to be detachable from the sheet member container 100. Therefore, good recyclability of the sheet member container 200 can be achieved.

Here, an example of a method for recycling the sheet member container 200 will be described.

This method includes: a step of separating the protective cover 300 from a plurality of sheet members (the sheet member container 100 composed of the plurality of sheet members); a step of washing the plurality of sheet members; a step of manufacturing a recycled resin using the plurality of washed sheet members; a step of washing the protective cover 300; and a step of manufacturing a recycled resin using the washed protective cover 300.

Furthermore, a plurality of sheet members is manufactured again using the recycled resin manufactured using the plurality of washed sheet members, and the sheet member container 100 is manufactured.

In addition, the protective cover 300 is manufactured again using the recycled resin manufactured using the washed protective cover 300.

In this embodiment, the protective cover 300 is disposed between the upper horizontally extending part 61c and the lower horizontally extending part 61d. As a result, positional displacement of the protective cover 300 in the vertical direction can be suppressed.

More specifically, for example, an opening 306 at an upper end of the protective cover 300 is disposed at a position slightly below the upper horizontally extending part 61c, and an opening 307 at a lower end of the protective cover 300 is disposed at a position slightly above the lower horizontally extending part 61d.

In this embodiment, an inner surface of the protective cover 300 is in contact with outer surfaces of the vertically extending parts 61a and 61b. As a result, positional displacement of the protective cover 300 can be more reliably suppressed.

The protective cover 300 is bonded to an outer surface of the filled part 60 with, for example, an adhesive (attached part 310 illustrated in Fig. 4). As a result, positional displacement of the protective cover 300 can be more reliably suppressed. As an example, the protective cover 300 is bonded to outer surfaces of the vertically extending parts 61a and 61b, for example.

Alternatively, the protective cover 300 may be bonded to the side part sealed piece 46 with an adhesive, and also in this case, positional displacement of the protective cover 300 can be more reliably suppressed.

As illustrated in Fig. 4, an inner surface of the protective cover 300 is in contact with an outer surface of the filled part 60 (for example, the vertically extending parts 61a and 61b), and there is a gap 301 between at least a part of the inner surface of the protective cover 300 and an outer surface of a part other than the filled part 60 in the container main body 20.

As a result, for example, even when the content 18 is cold, occurrence of dew condensation on an outer surface of the protective cover 300 can be suppressed. Moreover, since unevenness in the protective cover 300 is suppressed, visibility of a marking part 302 (see Fig. 2) is improved when the marking part 302 is formed on the protective cover 300.

In this embodiment, the container main body 20 has an outside air introducing part 380 that introduces outside air between an inner surface of the container main body 20 and an outer surface of the inner bag 40. The outside air introducing part 380 is covered with the protective cover 300.

Therefore, for example, when the sheet member container 200 is used in a bathroom or the like, intrusion of shower water or the like between the inner surface of the container main body 20 and the outer surface of the inner bag 40 through the outside air introducing part 380 can be suppressed.

The outside air introducing part 380 is, for example, a through hole penetrating the outer film layer 22 and the inner film layer 23.

With such a configuration, taking in of air through the outside air introducing part 380 (taking in of air between the inner surface of the container main body 20 and the outer surface of the inner bag 40) is smooth. Therefore, even when a large amount of content 18 is discharged in a short time, deformation (crushing) of the container main body 20 can be suppressed.

In this embodiment, printing is formed on the protective cover 300 (the marking part 302 is printed), but printing is not formed on the plurality of sheet members (the main body-forming sheet member 21 and the inner bag-forming sheet member 41).

As a result, good recyclability of the sheet member container 200 can be achieved.

However, printing may also be formed on the plurality of sheet members (the main body-forming sheet member 21 and inner bag-forming sheet member 41) such an extent that there is no problem in recycling. For example, only manufacturing lot information may be printed on the main body-forming sheet member 21 or the inner bag-forming sheet member 41. Such printing is preferably removable by washing.

### [Second Embodiment]

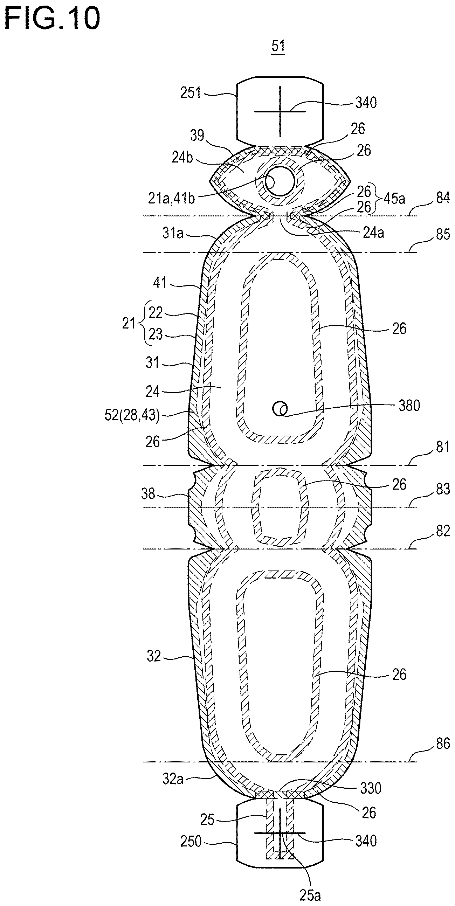

Next, a second embodiment will be described with reference to Figs. 10 to 11D, 12A, 13A, and 13B.

A sheet member container 200 of this embodiment is different from the sheet member container 200 of the first embodiment in the following points, and is configured similarly to the sheet member container 200 of the first embodiment in the other points.

In this embodiment, the sheet member container 200 has an extending part 251 composed of a part of a main body-forming sheet member 21 and extending from a container main body 20. The extending part 251 is pressed from the outside by a protective cover 300 so as to be disposed along an outer surface of the container main body 20.

Furthermore, the sheet member container 200 has a second extending part 250 composed of a part of the main body-forming sheet member 21 and extending from the container main body 20. The second extending part 250 and the extending part 251 extend from the same position of the container main body 20.

According to this embodiment, since the extending part 251 and the second extending part 250 cover the container main body 20, a piercing strength of the sheet member container 200 can be improved.

As illustrated in Fig. 10, in this embodiment, the second extending part 250 extends from a second main surface part-forming sheet part 32, and the extending part 251 extends from a first main surface part-forming sheet part 31. The extending part 251 and the second extending part 250 extend from, for example, a boundary part between a top gusset 14 and (a second main surface part 20b of) a trunk 11.

The shapes of the extending part 251 and the second extending part 250 are not particularly limited, but the extending part 251 and the second extending part 250 are each formed in a substantially rectangular shape, for example.

An injection port 25a is formed in the second extending part 250. After a filler is filled into a filled part 60 from the injection port 25a, for example, a sealing sealed portion 330 is formed at a proximal end of the second extending part 250 to seal the filled part 60. In Fig. 10, the sealing sealed portion 330 is illustrated for convenience.

A cross slit (cross slit 340) is formed in each of the extending part 251 and the second extending part 250.

The cross slit 340 is sized to allow a cylinder part 15a of a spout 15 to be inserted thereinto.

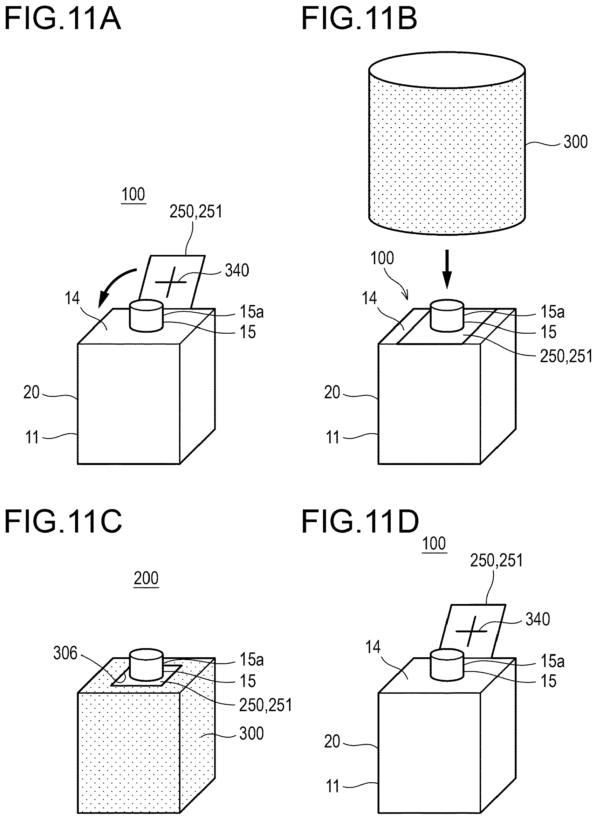

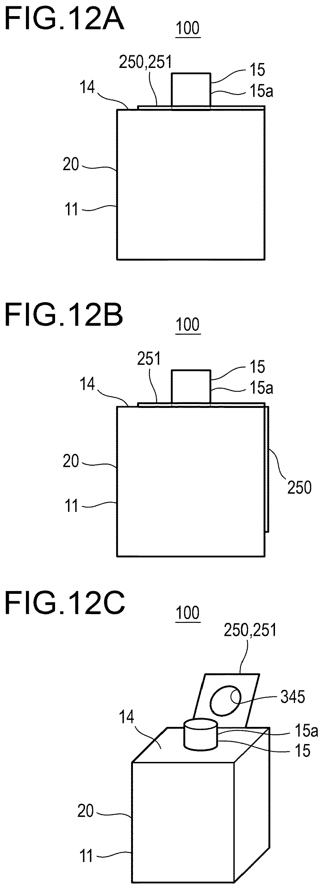

A sheet member container 100 is manufactured in a similar manner to the first embodiment using a container-forming sheet member 51 illustrated in Fig. 10.
Thereafter, as schematically illustrated in Fig. 11A, in a state where the extending part 251 and the second extending part 250 are overlapped with each other, the extending part 251 and the second extending part 250 are folded back at a proximal end such that the extending part 251 and the second extending part 250 are along the top gusset 14. At this time, the cylinder part 15a of the spout 15 is caused to protrude through the cross slits 340 of the extending part 251 and the second extending part 250 (see Fig. 12A).

That is, the extending part 251 covers the top part (top gusset 14), and the cylinder part 15a protrudes through an opening part (cross slit 340) formed in the extending part 251.

Next, as illustrated in Fig. 11B, the protective cover 300 which is a shrink label is put over the sheet member container 100, and as illustrated in Fig. 11C, the protective cover 300 is contracted to attach the protective cover 300 in close contact with the sheet member container 100.

Note that in this embodiment, the protective cover 300 covers a part of the top gusset 14 and a part of a bottom gusset 13.

According to this embodiment, since the extending part 251 and the second extending part 250 cover the top gusset 14, a piercing strength of the top gusset 14 of the sheet member container 200 can be improved.

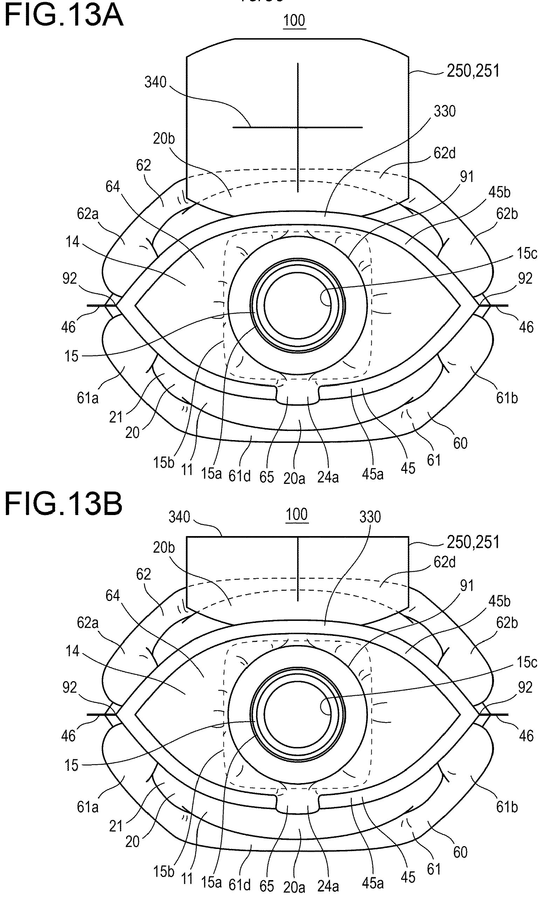

When the sheet member container 200 is recycled, first, as illustrated in Figs. 11D and 13A, the protective cover 300 is separated from the sheet member container 100.

Next, as illustrated in Fig. 13B, the extending part 251 and the second extending part 250 are folded at a slit extending in the lateral width direction out of the slits of the cross slit 340.

Next, the extending part 251 and the second extending part 250 are broken starting from a slit extending toward the sealing sealed portion 330 out of the slits of the cross slit 340, and the sealing sealed portion 330 is also broken. As a result, since an internal space of the filled part 60 communicates with the outside, a filler can be easily discharged, and recycling is easy.

Note that only the second extending part 250 out of the extending part 251 and the second extending part 250 may be broken, and the sealing sealed portion 330 may be broken.

### <Modified Example 1 of Second Embodiment>

Next, Modified Example 1 of the second embodiment will be described with reference to Fig. 12B.

A sheet member container of this Modified Example is different from the sheet member container 200 of the second embodiment in the following points, and is configured similarly to the sheet member container 200 of the second embodiment in the other points.

In the second embodiment, the example in which both the extending part 251 and the second extending part 250 cover the top gusset 14 has been described, but in this Modified Example, as illustrated in Fig. 12B, the extending part 251 covers the top gusset 14 similarly to the second embodiment, but the second extending part 250 covers the trunk 11.

That is, the sheet member container of this Modified Example has the second extending part 250 composed of a part of the main body-forming sheet member and extending from the container main body 20. The second extending part 250 and the extending part 251 extend from the same position of the container main body 20, and the second extending part 250 covers the trunk 11.

As a result, a piercing strength of the sheet member container 200 can be improved in both the top gusset 14 and the trunk 11.

### <Modified Example 2 of Second Embodiment>

Next, Modified Example 2 of the second embodiment will be described with reference to Fig. 12C.

A sheet member container of this Modified Example is different from the sheet member container 200 of the second embodiment in the following points, and is configured similarly to the sheet member container 200 of the second embodiment in the other points.

In this Modified Example, as illustrated in Fig. 12C, an opening 345 having a circular shape or the like having a larger diameter than the cylinder part 15a of the spout 15 is formed in each of the extending part 251 and the second extending part 250, and the cylinder part 15a is inserted into the opening 345.

### <Modified Example 3 of Second Embodiment>

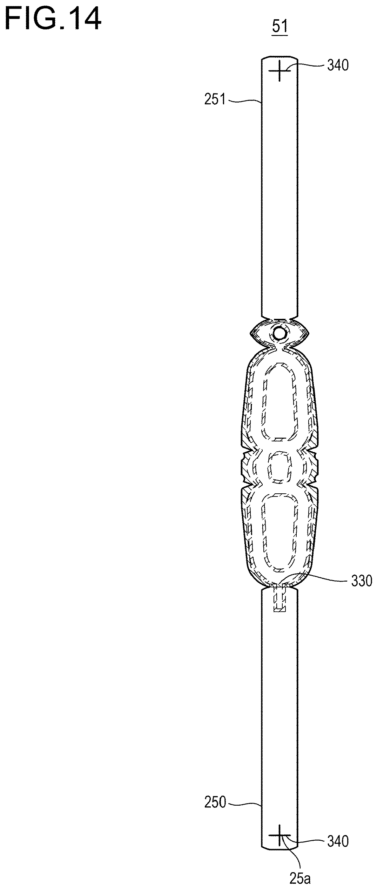

Next, Modified Example 3 of the second embodiment will be described with reference to Figs. 14 to 15B.

A sheet member container of this Modified Example is different from the sheet member container 200 of the second embodiment in the following points, and is configured similarly to the sheet member container 200 of the second embodiment in the other points.

As illustrated in Fig. 14, in this Modified Example, the extending part 251 and the second extending part 250 are longer than those of the second embodiment.

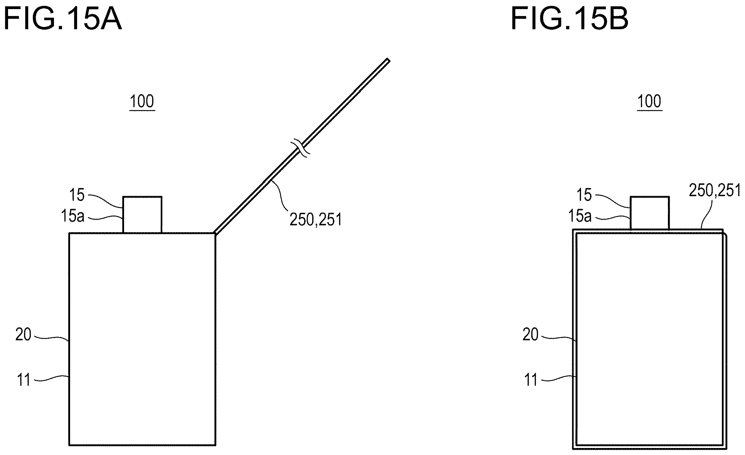

As illustrated in Figs. 15A and 15B, the extending part 251 and the second extending part 250 are wound along outer surfaces of the first main surface part 20a, the bottom part (bottom gusset 13), the second main surface part 20b, and the top part (top gusset 14).

As a result, a piercing strength of the sheet member container 200 can be improved in the first main surface part 20a, the bottom part (bottom gusset 13), the second main surface part 20b, and the top part (top gusset 14).

### <Modified Example 4 of Second Embodiment>

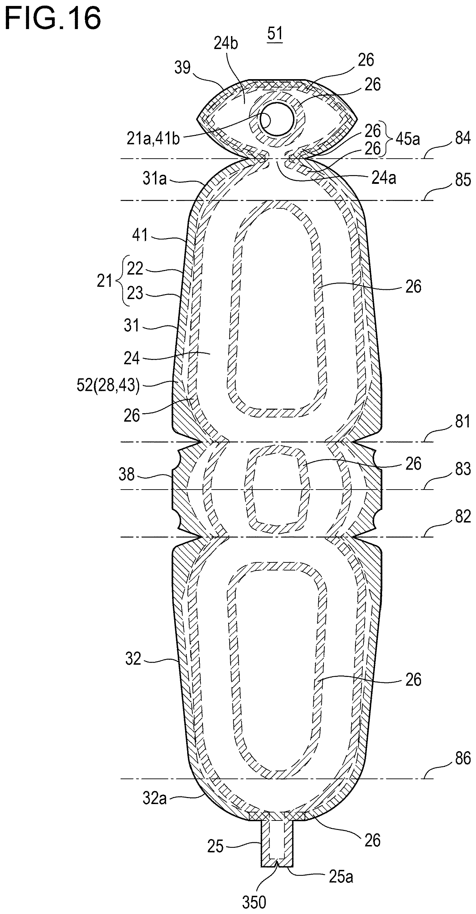

Next, Modified Example 4 of the second embodiment will be described with reference to Fig. 16.

A sheet member container of this Modified Example is different from the sheet member container 200 of the second embodiment in the following points, and is configured similarly to the sheet member container 200 of the second embodiment in the other points.

In this Modified Example, as illustrated in Fig. 16, the sheet member container does not have the extending part 251 and the second extending part 250, but has an extending part 25.

The sheet member container has the sealing sealed portion 330 in which an outer film layer and an inner film layer are attached to each other at a boundary between the extending part 25 and the filled part 60, and the extending part 25 has a notch 350 extending toward the filled part 60 across the sealing sealed portion 330.

As a result, at the time of recycling, by breaking the extending part 25 from the notch 350 and also breaking the sealing sealed portion 330, a filler can be discharged from the filled part 60.

Note that in this Modified Example, in a state where the protective cover 300 is attached to the sheet member container, the extending part 25 is disposed along the trunk 11 or the top part (top gusset 14), and is pressed by the protective cover 300 from the outside.

### <Modified Example 5 of Second Embodiment>

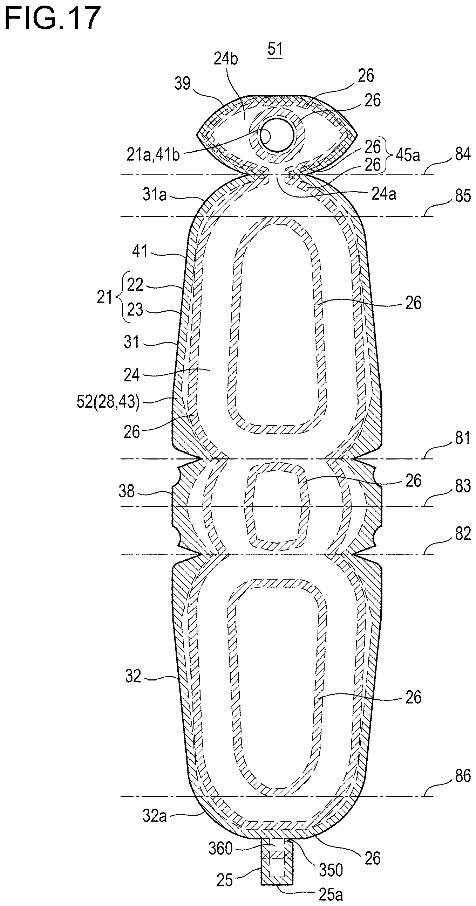

Next, Modified Example 5 of the second embodiment will be described with reference to Fig. 17.

A sheet member container of this Modified Example is different from the sheet member container of the Modified Example 4 (Fig. 16) in the following points, and is configured similarly to the sheet member container of the Modified Example 4 in the other points.

In this Modified Example, as illustrated in Fig. 17, the extending part 25 has a communication area 360 communicating with the filled part 60 therein, and the notch 350 extending toward the communication area 360. That is, in this Modified Example, as illustrated in Fig. 17, the position of a sealed portion by sealing after a filler is filled is located closer to a distal end side of the extending part 25 than the notch 350. As a result, the extending part 25 has the communication area 360 therein.

As a result, at the time of recycling, by breaking the extending part 25 from the notch 350, a filler can be discharged from the filled part 60 through the communication area 360.

### [Third Embodiment]

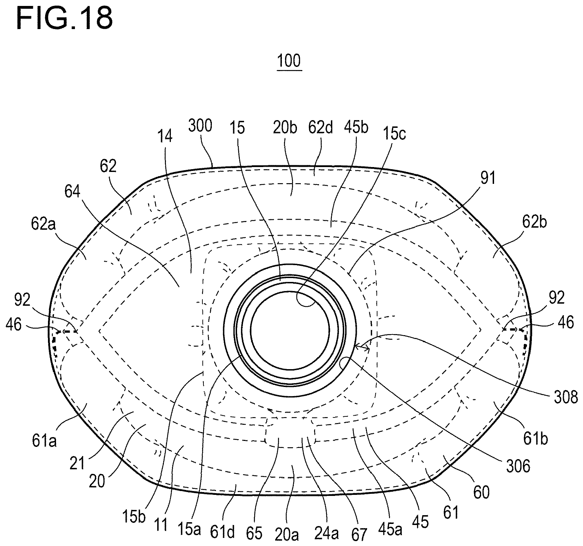

Next, a third embodiment will be described with reference to Figs. 18 to 20.

A sheet member container 200 of this embodiment is different from the sheet member container 200 of the first embodiment in the following points, and is configured similarly to the sheet member container 200 of the first embodiment in the other points.

As described in the first embodiment, at the time of manufacturing the sheet member container 200, the circumferential parts of the container-forming sheet member 51 are attached to each other in a state where the container-forming sheet member 51 is folded at the folding lines 81 to 86. Therefore, folds are formed at parts corresponding to the folding lines 81 to 86.

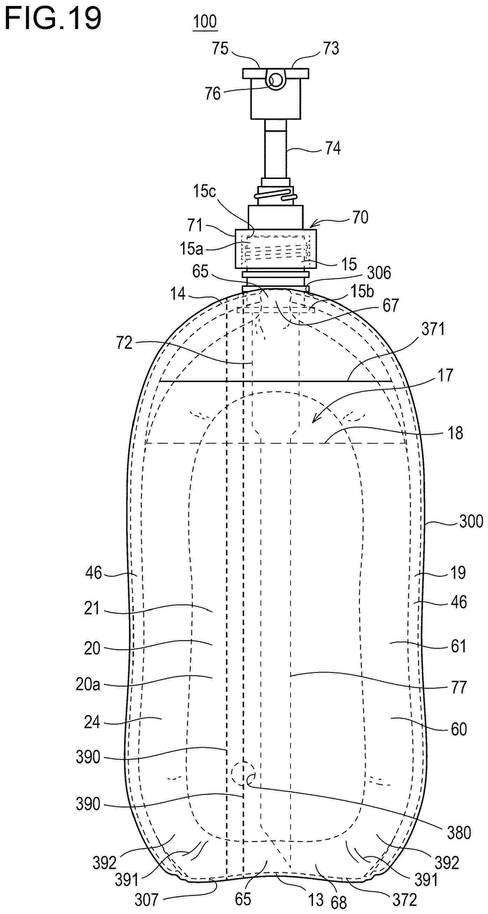

A fold 371 illustrated in Fig. 19 corresponds to the folding lines 85 and 86, and a fold 372 corresponds to the folding lines 81 and 82.

That is, a container main body 20 has the folds 371 and 372 extending in the lateral width direction of a trunk 11.

In this embodiment, the size of a protective cover 300 is set such that the folds 371 and 372 are covered with the protective cover 300.

Since the protective cover 300 covers the folds 371 and 372, deformation of the sheet member container 200 at the folds 371 and 372 is suppressed. Therefore, impact absorption when the sheet member container 200 falls is improved, and a compressive strength of the sheet member container 200 is also improved.

More specifically, the fold is formed at each of an upper part and a lower part of the trunk 11. The fold 371 is disposed at an upper part of the trunk 11, and the fold 372 is disposed at a lower end of the trunk 11 (a boundary part between the trunk 11 and a bottom gusset 13).

The protective cover 300 (continuously) covers the trunk 11 from the upper fold 371 of the trunk 11 to the lower fold 372 of the trunk 11.

As described in the first embodiment, a filled part 60 is disposed across the trunk 11 and a top gusset 14.

In this embodiment, the protective cover 300 covers a part from the trunk 11 to the top gusset 14.

That is, the filled part 60 includes a first filled part 67 (Figs. 18 and 19) disposed across the trunk 11 and the top part (top gusset 14), and the protective cover 300 covers the first filled part 67 from a part disposed on the trunk 11 to a part disposed on the top part (top gusset 14) in the first filled part 67.

With such a structure, deformation of the first filled part 67 is suppressed, and a compressive strength of the sheet member container 200 is further improved.

Note that the first filled part 67 is a part from a first main surface part side filled part 61 to a gusset part filled part 64 in the filled part 60.

As described in the first embodiment, the filled part 60 is disposed across the trunk 11 and the bottom gusset 13.

In this embodiment, the protective cover 300 covers a part from the trunk 11 to the bottom gusset 13.

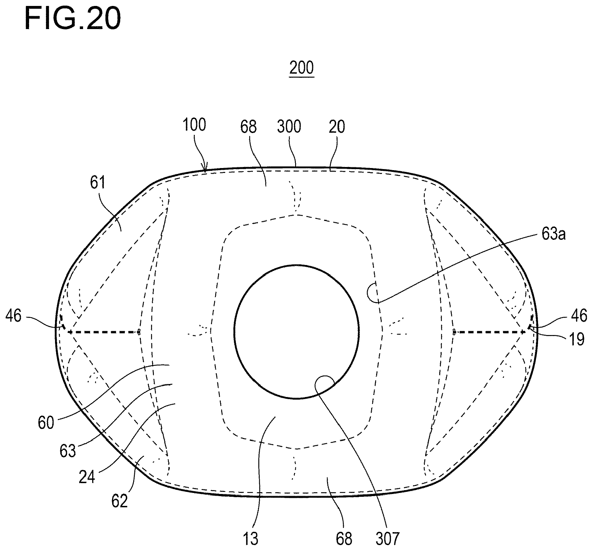

That is, the filled part 60 includes a second filled part 68 (Figs. 19 and 20) disposed across the trunk 11 and the bottom part (bottom gusset 13), and the protective cover 300 covers the second filled part 68 from a part disposed on the trunk 11 to a part disposed on the bottom part (bottom gusset 13) in the second filled part 68.

With such a structure, deformation of the second filled part 68 is suppressed, and a compressive strength of the sheet member container 200 is further improved.

Note that in this embodiment, the sheet member container 200 has the second filled part 68 on each of a front side and a back side. The second filled part 68 on the front side is a part from the first main surface part side filled part 61 to a bottom part filled part 63 in the filled part 60. The second filled part 68 on the back side is a part from a second main surface part side filled part 62 to the bottom part filled part 63 in the filled part 60.

More specifically, In this embodiment, as illustrated in Fig. 20, an inner circumference of an opening 307 at a lower end of the protective cover 300 is disposed inside an inner periphery 63a of the bottom part filled part 63.

As described above, the container main body 20 has the trunk 11 and the bottom part (bottom gusset 13), the filled part 60 includes the bottom part filled part 63 disposed at the bottom part, and the protective cover 300 covers the entire bottom part filled part 63.

Since the protective cover 300 covers the entire bottom part filled part 63, breakage of the filled part 60 due to vibration or friction with a packaging material (cardboard or the like) can be suppressed during transportation of the sheet member container 200 or the like.

Here, in the vicinity of an intersection between vertically extending parts 61a and 61b and a lower horizontally extending part 61d in the first main surface part side filled part 61, a part where the filled part 60 protrudes outward is easily formed.

Hereinafter, this protruding part is referred to as a horn part 392 (see Fig. 19).

In this embodiment, the protective cover 300 also covers the horn part 392. As a result, since the protective cover 300 can protect the horn part 392, it is possible to suppress the horn part 392 from being rubbed, and thus it is possible to suppress the filled part 60 from unintentionally communicating with the outside air.

Furthermore, in this embodiment, as illustrated in Fig. 18, the protective cover 300 covers the top part (top gusset 14) including at least a circumferential part of a flange part 15b.

Therefore, substantially the entire top gusset 14 can be protected by a spout 15 or the protective cover 300.

In the protective cover 300, printing (solid printing on the entire surface) is preferably formed on the entire surface of a part covering a part other than the flange part 15b in the part covering the top part (top gusset 14).

As a result, a light shielding property of the substantially entire top gusset 14 can be satisfactorily ensured by the spout 15 or the protective cover 300.

Here, when the protective cover 300 is a shrink label, at circumferential parts of the upper and lower openings 306 and 307 of the protective cover 300, there is a margin 308 (Fig. 18) on which printing cannot be formed. Therefore, the margin 308 around the opening 306 is preferably disposed at a position overlapping the flange part 15b, and printing is preferably formed on the entire surface of a part not overlapping the flange part 15b in the part covering the top gusset 14 in the protective cover 300.

Furthermore, printing (solid printing on the entire surface) is preferably formed also on the entire surface of the protective cover 300 covering the trunk from a viewpoint of a light shielding property, and printing (solid printing on the entire surface) is preferably formed also on the entire surface of the protective cover 300 covering the bottom part from a viewpoint of the light shielding property.

Also in this embodiment, the sheet member container 200 has an outside air introducing part 380.

Here, in a part where the thickness of the filled part 60 changes, a part where the extending direction of the filled part 60 changes, or a part where the filled part 60 branches in a plurality of directions (joined part), a wrinkle 391 is easily formed in the filled part 60.

In a state where a place where the wrinkle 391 is formed is covered with the protective cover 300, an air flow path is formed between an inner surface of the protective cover 300 and an outer surface of the filled part 60.

Therefore, the outside air can be supplied to the outside air introducing part 380 through the flow path.

That is, the inner surface of the protective cover 300 is in contact with the outer surface of the filled part 60, there is a gap between the inner surface of the protective cover 300 and an area where the outside air introducing part 380 is formed in the container main body 20, the wrinkle 391 is formed in the filled part 60, an air flow path is formed between the inner surface of the protective cover 300 and the outer surface of the filled part 60 at a position where the wrinkle 391 is formed, and the gap between the inner surface of the protective cover 300 and the area where the outside air introducing part 380 is formed in the container main body 20 communicates with an external space of the sheet member container 200 through the flow path.

In this embodiment, a perforation 390 for breaking the protective cover 300 is formed in the protective cover 300. A slit of the perforation 390 is formed at a position corresponding to the outside air introducing part 380.

As a result, the outside air can be supplied to the outside air introducing part 380 through the slit of the perforation 390.

### [Fourth Embodiment]

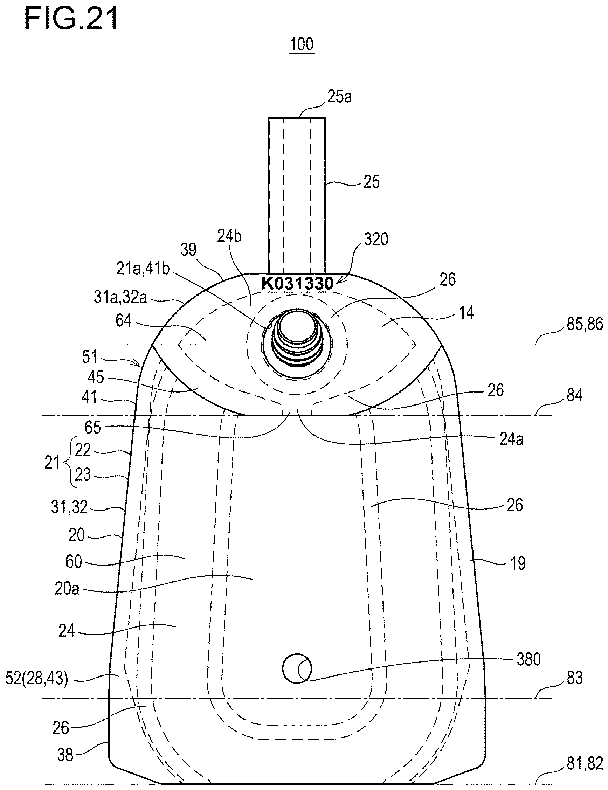

Next, a fourth embodiment will be described with reference to Fig. 21.

A sheet member container 200 of this embodiment is different from the sheet member container 200 of the first embodiment in the following points, and is configured similarly to the sheet member container 200 of the first embodiment in the other points.

In this embodiment, as illustrated in Fig. 21, only manufacturing lot information (marking part 320) is printed on a main body-forming sheet member 21 without using ink.

As a result, good recyclability of the sheet member container 200 can be achieved.

A method for forming the marking part 320 is not particularly limited. However, examples thereof include a method for performing pressure molding, or performing embossing or pressing a smooth seal bar during heat sealing to form an engraved mark, and a method for making a marking part clouded or more transparent than surrounding portion by heat to perform printing.

Preferably, the marking part 320 is printed by forming an engraved mark in a step of folding the container-forming sheet member 51 at folding lines 81 to 86 and attaching circumferential parts of the container-forming sheet member 51 to each other by heat sealing as described above.

Alternatively, printing may be performed on the main body-forming sheet member 21 by laser irradiation.

Not only the manufacturing lot information but also characters and patterns such as a brand logo and a brand name may be formed by a method not using ink as described above.

### [Fifth Embodiment]

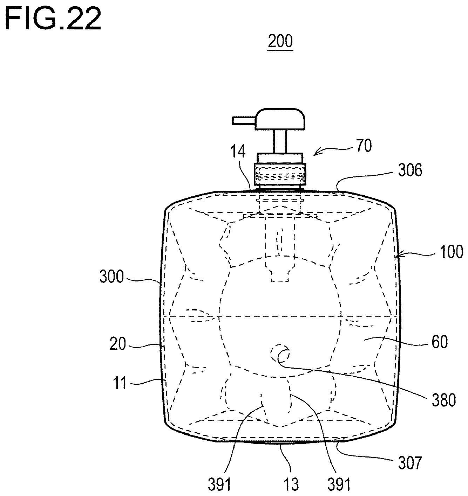

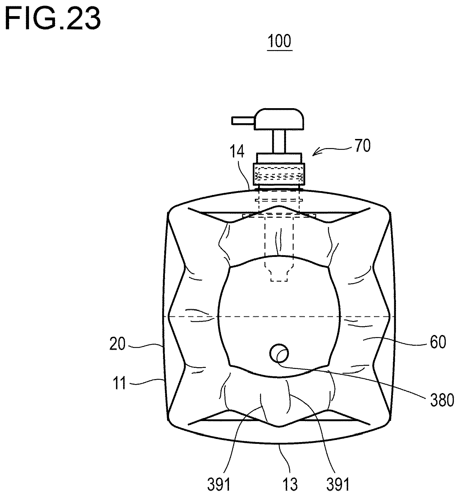

Next, a fifth embodiment will be described with reference to Figs. 22 to 25.

A sheet member container 200 of this embodiment is different from the sheet member container 200 of the third embodiment in the following points, and is configured similarly to the sheet member container 200 of the third embodiment in the other points.

In this embodiment, as illustrated in Figs. 22 to 24, a sheet member container 100 is formed in a substantially rectangular parallelepiped shape (for example, a substantially cubic shape).

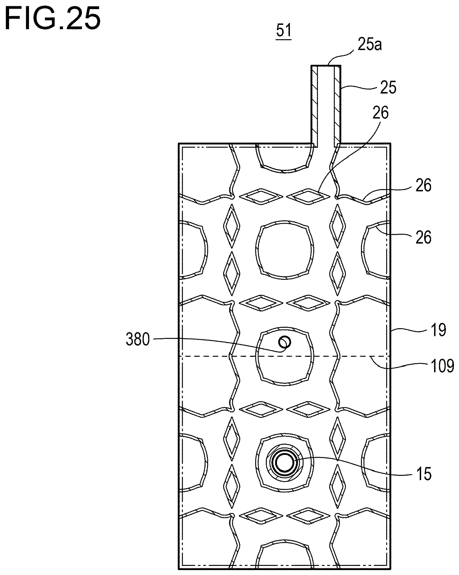

In this embodiment, the sheet member container 100 is manufactured using a container-forming sheet member 51 illustrated in Fig. 25.

In order to manufacture the sheet member container 100, first, the container-forming sheet member 51 illustrated in Fig. 25 is folded in two at a folding line 109, and circumferential parts of the container-forming sheet member 51 are attached to each other.

Next, a filler is injected into a non-attached region 24 from an injection port 25a. In this process, the filler is filled into the non-attached region 24, and the container-forming sheet member 51 bulges into a substantially cubic shape. Then, the non-attached region 24 is sealed at a proximal end of an extending part 25. As a result, the filler is enclosed in the non-attached region 24 (filled part 60).

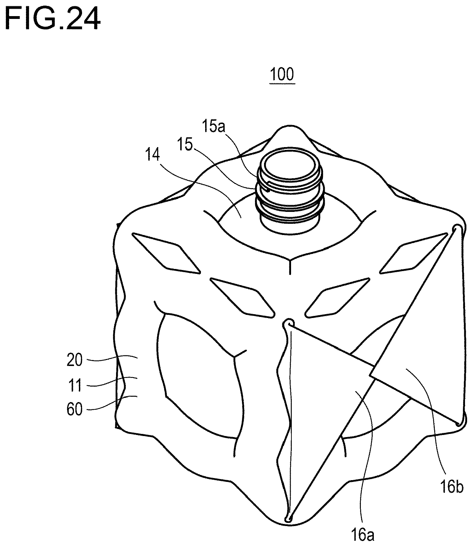

Note that only by simply filling the filler and bulging the container-forming sheet member 51 to form the substantially cubic sheet member container 100, there are two pairs of ear-shaped parts protruding from the substantially cubic part in the sheet member container 100. Therefore, for example, as illustrated in Fig. 24, one pair of ear-shaped parts 16a and 16b is folded along one outer surface of the substantially cubic part, and tip parts of the ear-shaped parts 16a and 16b are fixed to each other. Similarly, the other pair of ear-shaped parts is folded along the other outer surface (the surface facing the opposite side to the one outer surface) of the substantially cubic part, and tip parts of these ear-shaped parts are fixed to each other.

As illustrated in Fig. 22, also in this embodiment, a protective cover 300 covers a part from a bottom gusset 13 to a top gusset 14 of the sheet member container 100.

Also in this embodiment, the filled part 60 includes a vertically extending part extending vertically at a corner in a cross section of a trunk 11, and an inner surface of the protective cover 300 is in contact with an outer surface of the vertically extending part. As a result, positional displacement of the protective cover 300 can suitably suppressed.

### [Sixth Embodiment]

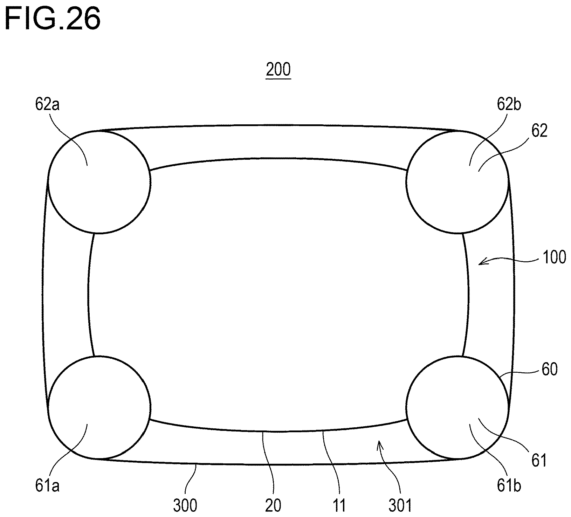

Next, a sixth embodiment will be described with reference to Fig. 26.

A sheet member container 200 of this embodiment is different from the sheet member container 200 of the first embodiment in the following points, and is configured similarly to the sheet member container 200 of the first embodiment in the other points.

In this embodiment, as illustrated in Fig. 26, at each of four corners in a plane cross section of the sheet member container 200, a filled part 60 protrudes outward more than a part other than the filled part 60 in the sheet member container 100.

Therefore, in a front view of the sheet member container 200, vertically extending parts 61a and 61b of the filled part 60 protrude in the horizontal direction more than a part other than the filled part 60 in the container main body 20, and in a side view of the sheet member container 200, the vertically extending part (vertically extending part 61a and vertically extending part 62a, or vertically extending part 61b and vertically extending part 62b) of the filled part 60 protrudes in the horizontal direction more than the part other than the filled part 60 in the container main body 20. In a back view of the sheet member container 200, the vertically extending parts 62a and 62b of the filled part 60 protrude in the horizontal direction more than the part other than the filled part 60 in the container main body 20.

As a result, it is possible to achieve a structure in which an inner surface of the protective cover 300 is not in contact with an outer surface of the part other than the filled part 60 in the container main body 20, and occurrence of dew condensation can be more reliably suppressed.

### [Seventh Embodiment]

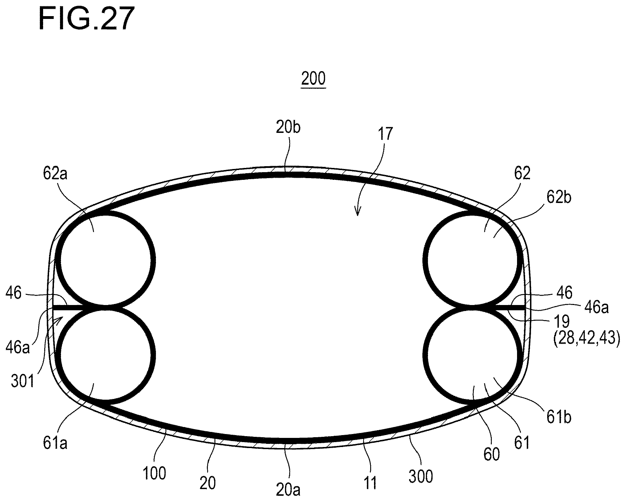

Next, a seventh embodiment will be described with reference to Fig. 27.

A sheet member container 200 of this embodiment is different from the sheet member container 200 of the first embodiment in the following points, and is configured similarly to the sheet member container 200 of the first embodiment in the other points.

Also in this embodiment, a container main body 20 has a trunk 11, and a protective cover 300 is wound around the entire circumference of the trunk 11.

Also in this embodiment, a filled part 60 includes vertically extending parts 61a, 61b, 62a, and 62b extending vertically at corners in a cross section of the trunk 11, and an inner surface of the protective cover 300 is in contact with outer surfaces of the vertically extending parts 61a, 61b, 62a, and 62b.

As described above, a sheet member container 100 includes a circumferential sealed portion 19 in which circumferential parts of one or more sheet members are attached to each other, and the circumferential sealed portion 19 includes a side part sealed piece 46 extending along each of a pair of side edges of the trunk 11. That is, the circumferential sealed portion 19 includes the side part sealed piece 46 extending vertically along a left side edge of the trunk 11 and the side part sealed piece 46 extending vertically along a right side edge of the trunk 11.

In this embodiment, as illustrated in Fig. 27, the vertically extending parts 61a, 61b, 62a, and 62b are adjacent to the side part sealed piece 46.

More specifically, the left vertically extending part 61a and the left vertically extending part 62a are adjacent to the left side part sealed piece 46. The vertically extending part 61a is adjacent to a front side of the left side part sealed piece 46, and the vertically extending part 62a is adjacent to a rear side of the left side part sealed piece 46. Furthermore, the vertically extending part 61a and the vertically extending part 62a are adjacent to each other in the front-rear direction.

Similarly, the right vertically extending part 61b and the right vertically extending part 62b are adjacent to the right side part sealed piece 46. The vertically extending part 61b is adjacent to a front side of the right side part sealed piece 46, and the vertically extending part 62b is adjacent to a rear side of the right side part sealed piece 46. Furthermore, the vertically extending part 61b and the vertically extending part 62b are adjacent to each other in the front-rear direction.

According to this embodiment, the side part sealed piece 46 is embedded between the front and rear filled parts by contraction of the protective cover 300. That is, as illustrated in Fig. 27, the left side part sealed piece 46 is embedded between the vertically extending part 61a and the vertically extending part 62a, and the right side part sealed piece 46 is embedded between the vertically extending part 61b and the vertically extending part 62b. Therefore, since the side part sealed piece 46 is protected by the front and rear filled parts, breakage of the side part sealed piece 46 due to impact can be suppressed.

By setting the width size (size in the left-right direction in Fig. 27) of the side part sealed piece 46 to a width size that is small enough such that the side part sealed piece 46 does not protrude laterally more than the front and rear filled parts, stimulation by the side part sealed piece 46 can be suppressed, and therefore hand feel can be softer when the sheet member container 200 is gripped.

As illustrated in Fig. 27, it is a preferable example that a free end 46a of the side part sealed piece 46 is in contact with an inner surface of the protective cover 300. However, the free end 46a of the side part sealed piece 46 may be separated from the inner surface of the protective cover 300 without reaching the inner surface.

For example, as illustrated in Fig. 27, there are a gap 301 surrounded by the side part sealed piece 46, the vertically extending part 61a, and the protective cover 300, a gap 301 surrounded by the side part sealed piece 46, the vertically extending part 62a, and the protective cover 300, a gap 301 surrounded by the side part sealed piece 46, the vertically extending part 61b, and the protective cover 300, and a gap 301 surrounded by the side part sealed piece 46, the vertically extending part 62b, and the protective cover 300, and these gaps 301 extend in the vertical direction of the trunk 11.

Note that in the protective cover 300, a perforation (see Fig. 18) for breaking the protective cover 300 may be formed at a position overlapping any one of these gaps 301, and the perforation may extend vertically along the gap 301. In this case, since there is a gap on an inner side of the protective cover 300, the protective cover 300 can be easily broken by the perforation and removed from the sheet member container 100.

### [Eighth Embodiment]

Next, an eighth embodiment will be described with reference to Figs. 28 to 30.

A sheet member container 200 of this embodiment is different from the sheet member container 200 of the first embodiment in the following points, and is configured similarly to the sheet member container 200 of the first embodiment in the other points.

In this embodiment, an intersection 92 and an intersection 93 (described below) illustrated in Fig. 28 are covered with a protective cover 300.

As described above, a container main body 20 has a trunk 11 and a gusset part (a bottom gusset 13 and a top gusset 14 in this embodiment), and the trunk 11 has a first main surface part 20a and a second main surface part 20b facing each other with a containing portion 17 interposed therebetween. A main body-forming sheet member 21 includes a first main surface part-forming sheet part 31 forming the first main surface part 20a, a second main surface part-forming sheet part 32 forming the second main surface part 20b, a gusset part-forming sheet part forming the gusset (a bottom gusset-forming sheet part 38 forming the bottom gusset 13 and a top gusset-forming sheet part 39 forming the top gusset 14) (see Fig. 7).

Facing inner side edges of the first main surface part-forming sheet part 31 and the second main surface part-forming sheet part 32 are attached to each other to form a side part sealed piece 46. When the sheet member container 200 has an inner bag 40, for example, the facing inner side edges of the first main surface part-forming sheet part 31 and the second main surface part-forming sheet part 32 are attached to each other with an inner bag-forming sheet member 41 interposed therebetween to form the side part sealed piece 46.

As illustrated in Fig. 28, on an upper side of the side part sealed piece 46, a first main surface part side sealed piece 463 formed by attaching facing inner side edges of the first main surface part-forming sheet part 31 and the top gusset-forming sheet part 39 to each other, and a second main surface part side sealed piece 464 formed by attaching facing inner side edges of the second main surface part-forming sheet part 32 and the top gusset-forming sheet part 39 to each other are disposed. Note that Fig. 28 illustrates the first main surface part side sealed piece 463 and the second main surface part side sealed piece 464 in the right half of the top gusset 14, but the first main surface part side sealed piece 463 and the second main surface part side sealed piece 464 are similarly (symmetrically in the left-right direction) formed in the left half of the top gusset 14.

On a lower side of the side part sealed piece 46, a first main surface part side sealed piece 461 formed by attaching facing inner side edges of the first main surface part-forming sheet part 31 and the bottom gusset-forming sheet part 38 to each other, and a second main surface part side sealed piece 462 formed by attaching facing inner side edges of the second main surface part-forming sheet part 32 and the bottom gusset-forming sheet part 38 to each other are disposed. Note that Fig. 28 illustrates the first main surface part side sealed piece 461 and the second main surface part side sealed piece 462 in the right half of the bottom gusset 13, but the first main surface part side sealed piece 461 and the second main surface part side sealed piece 462 are similarly (symmetrically in the left-right direction) formed in the left half of the bottom gusset 13.

Here, in this embodiment, the container main body 20 has both the top gusset 14 and the bottom gusset 13. However, the present invention is not limited to this example, and the container main body 20 may have only one of the top gusset 14 and the bottom gusset 13.

That is, on an upper side or a lower side of the side part sealed piece 46, a first main surface part side sealed piece formed by attaching facing inner side edges of the first main surface part-forming sheet part 31 and the gusset part-forming sheet part (top gusset-forming sheet part 39 or bottom gusset-forming sheet part 38) to each other, and a second main surface part side sealed piece formed by attaching facing inner side edges of the second main surface part-forming sheet part 32 and the gusset part-forming sheet part (top gusset-forming sheet part 39 or bottom gusset-forming sheet part 38) to each other are disposed.

The container main body 20 has an intersection where ends of the side part sealed piece 46, the first main surface part side sealed piece, and the second main surface part side sealed piece intersect each other.

In this embodiment, the container main body 20 has the intersection 92 where the side part sealed piece 46, the first main surface part side sealed piece 461, and the second main surface part side sealed piece 462 intersect each other in each of the left half and the right half of the container main body 20, and the intersection 93 where the side part sealed piece 46, the first main surface part side sealed piece 463, and the second main surface part side sealed piece 464 intersect each other in each of the left half and the right half of the container main body 20.

These intersections 92 and 93 are covered with the protective cover 300.

The intersections 92 and 93 are parts where an attaching strength of a sheet member composing the sheet member container 200 is relatively weak. However, since the intersections 92 and 93 are covered with the protective cover 300, breakage of the intersections 92 and 93 due to impact can be suppressed.

Here, the container main body 20 in this embodiment does not have a skirt part covering the intersection 92 from a side, but the container main body 20 may have the skirt part.

As illustrated in Fig. 28, a filled part 60 and the intersection 92 are separated from each other with a main-body sealed portion 26 interposed therebetween. As a result, stress on the intersection 92 is reduced, and durability of the sheet member container 200 against impact is further improved.

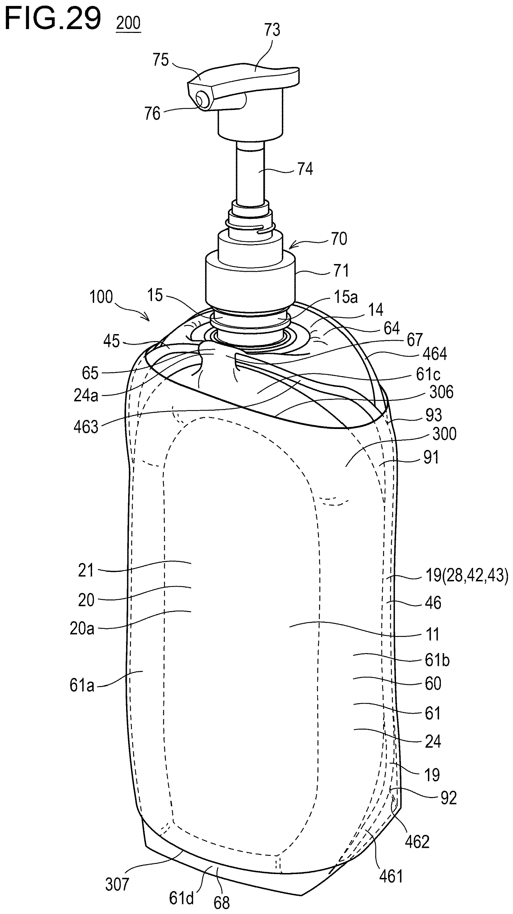

At least one of an upper end and a lower end of the protective cover 300 may be located on the filled part. In this embodiment, as illustrated in Figs. 28 and 29, the upper end (upper edge) of the protective cover 300 is located on an upper horizontally extending part 61c and an upper horizontally extending part 62c, and the lower end (lower edge) of the protective cover 300 is located on a lower horizontally extending part 61d and a lower horizontally extending part 62d.

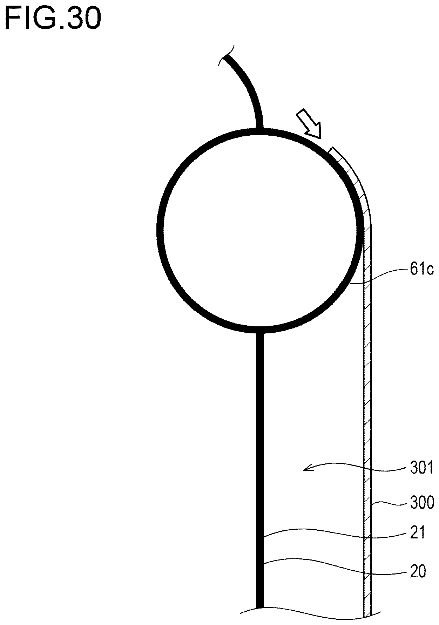

With this configuration, when the protective cover 300 is peeled off, by pressing and recessing the filled part where the upper end or the lower end of the protective cover is located, a gap is easily formed between the protective cover 300 and the filled part, and the protective cover 300 can be peeled off by inserting a finger into the gap (see Fig. 30).

Furthermore, when a starting point of a perforation for breaking the protective cover 300 is located on the filled part, the protective cover 300 can be easily broken from the starting point, and the protective cover 300 can be peeled off.

The present invention is not limited to the embodiments described above, and includes various deformations, modifications, and the like as long as the purpose of the present invention is achieved.

For example, the sheet member container 200 does not have to include the inner bag 40. In this case, the container main body 20 forms the containing portion 17. That is, in the circumferential sealed portion 19, parts of the inner film layer 23 of the main body-forming sheet member 21 are attached to each other, thereby forming the container main body 20 and forming the containing portion 17.

In this case, for example, an outer surface 151 of the flange part 15b is directly attached to the inner film layer 23 of the main body-forming sheet member 21 by an attached part 91.

In the above description, the example in which the sheet member container 200 is a pump container having the pump part 72 has been described, but the sheet member container 200 may be other than the pump container. For example, the sheet member container 200 may have a cap (such as a screw cap) that closes the cylinder part 15a.

The various constituents of the sheet member container 200 do not need to be independent of each other. A plurality of constituents may be formed as one member, one constituent may be formed of a plurality of members, one constituent may be a part of another constituent, or a part of one constituent may overlap a part of another constituent, and the like.

The above-described embodiments and Modified Examples can be appropriately combined with each other without departing from the gist of the present invention.

### REFERENCE SIGNS LIST

- 11: Trunk
- 13: Bottom gusset (bottom part)
- 14: Top gusset (top part)
- 15: Spout
- 15a: Cylinder part
- 15b: Flange part
- 15c: Pouring outlet
- 17: Containing portion
- 18: Content
- 19: Circumferential sealed portion
- 20: Container main body
- 20a: First main surface part
- 20b: Second main surface part
- 21: Main body-forming sheet member
- 22: Outer film layer
- 23: Inner film layer
- 24: Non-attached region
- 26, 28: Main-body sealed portion
- 28: Body circumferential sealed portion
- 31: First main surface part-forming sheet part
- 32: Second main surface part-forming sheet part
- 41: Inner bag-forming sheet member
- 46: Side part sealed piece
- 46a: Free end
- 51: Container-forming sheet member
- 60: Filled part
- 61: First main surface part side filled part
- 61a, 61b: Vertically extending part
- 61c: Upper horizontally extending part
- 61d: Lower horizontally extending part
- 62: Second main surface part side filled part
- 62a, 62b: Vertically extending part
- 63: Bottom part filled part
- 67: First filled part
- 68: Second filled part
- 92, 93: Intersection
- 100, 200: Sheet member container
- 250: Second extending part
- 251: Extending part
- 340: Cross slit
- 300: Protective cover
- 302: Marking part
- 306, 307: Opening
- 308: Margin
- 301: Gap
- 310: Attached part
- 320: Marking part
- 330: Sealing sealed portion
- 345: Opening
- 350: Notch
- 360: Communication area
- 371: Fold
- 372: Fold
- 380: Outside air introducing part
- 390: Perforation
- 391: Wrinkle
- 392: Horn part
- 461, 463: First main surface part side sealed piece
- 462, 464: Second main surface part side sealed piece

## Claims

1. A sheet member container configured by comprising one or more sheet members including a main body-forming sheet member having an outer film layer and an inner film layer laminated on each other, the sheet member container comprising:
a containing portion that accommodates a content; and
a container main body that is composed of the main body-forming sheet member and surrounds the containing portion, wherein
the main body-forming sheet member has: a main-body sealed portion in which the outer film layer and the inner film layer are attached to each other; a non-attached region in which the outer film layer and the inner film layer are partially non-attached to each other; and a filled part in which a filler is enclosed between the outer film layer and the inner film layer in the non-attached region, and
the sheet member container further comprises a protective cover composed of a film and covering an outer surface of the container main body.

2. The sheet member container according to claim 1, wherein
the container main body has a trunk, and
the protective cover is wound around an entire circumference of the trunk.

3. The sheet member container according to claim 2, wherein
the filled part includes: an upper horizontally extending part extending horizontally in an upper part of the trunk; and a lower horizontally extending part extending horizontally in a lower part of the trunk, and
the protective cover is disposed between the upper horizontal extending part and the lower horizontal extending part.

4. The sheet member container according to claim 2 or 3, wherein
the filled part includes a vertically extending part extending vertically at a corner in a cross section of the trunk, and
an inner surface of the protective cover is in contact with an outer surface of the vertically extending part.

5. The sheet member container according to claim 4, wherein
the sheet member container has a circumferential sealed portion in which circumferential parts of the one or more sheet members are attached to each other, and
the circumferential sealed portion includes a side part sealed piece extending along each of a pair of side edges of the trunk, and
the vertically extending part is adjacent to the side part sealed piece.

6. The sheet member container according to claim 4, wherein
in a front view, the vertically extending part protrudes in a horizontal direction more than a part other than the filled part in the container main body, and
in a side view, the vertically extending part protrudes in the horizontal direction more than the part other than the filled part in the container main body.

7. The sheet member container according to any one of claims 1 to 6, wherein the protective cover is bonded to an outer surface of the filled part with an adhesive.

8. The sheet member container according to any one of claims 1 to 7, wherein
the container main body has a trunk,
the sheet member container has a circumferential sealed portion in which circumferential parts of the one or more sheet members are attached to each other,
the circumferential sealed portion includes a side part sealed piece extending along each of a pair of side edges of the trunk, and
the protective cover is bonded to the side part sealed piece with an adhesive.

9. The sheet member container according to any one of claims 1 to 8, wherein
an inner surface of the protective cover is in contact with an outer surface of the filled part, and
there is a gap between at least a part of the inner surface of the protective cover and an outer surface of a part other than the filled part in the container main body.

10. The sheet member container according to claim 9, wherein the inner surface of the protective cover is not in contact with the outer surface of the part other than the filled part in the container main body.

11. The sheet member container according to any one of claims 1 to 10, wherein
the container main body has a trunk and a gusset part,
the trunk has a first main surface part and a second main surface part facing each other with the containing portion interposed therebetween,
the main body-forming sheet member includes a first main surface part-forming sheet part forming the first main surface part, a second main surface part-forming sheet part forming the second main surface part, and a gusset part-forming sheet part forming the gusset part,
facing inner side edges of the first main surface part-forming sheet part and the second main surface part-forming sheet part are attached to each other to form a side part sealed piece,
on an upper side or a lower side of the side part sealed piece, a first main surface part side sealed piece formed by attaching facing inner side edges of the first main surface part-forming sheet part and the gusset part-forming sheet part to each other, and a second main surface part side sealed piece formed by attaching facing inner side edges of the second main surface part-forming sheet part and the gusset part-forming sheet part to each other are disposed,
the container main body has an intersection where ends of the side part sealed piece, the first main surface part side sealed piece, and the second main surface part side sealed piece intersect each other, and
the intersection is covered with the protective cover.

12. The sheet member container according to any one of claims 1 to 11, wherein
the container main body has a trunk and a fold extending in a lateral width direction of the trunk, and
the fold is covered with the protective cover.

13. The sheet member container according to claim 12, wherein
the fold is formed at each of an upper part and a lower part of the trunk, and
the protective cover covers the trunk from the fold at the upper part of the trunk to the fold at the lower part of the trunk.

14. The sheet member container according to any one of claims 1 to 13, wherein
the container main body has a trunk and a top part,
the filled part includes a first filled part disposed across the trunk and the top part, and
the protective cover covers the first filled part from a part disposed on the trunk to a part disposed on the top part in the first filled part.

15. The sheet member container according to any one of claims 1 to 14, wherein
the container main body has a trunk and a bottom part,
the filled part includes a second filled part disposed across the trunk and the bottom part, and
the protective cover covers the second filled part from a part disposed on the trunk to a part disposed on the bottom part in the second filled part.

16. The sheet member container according to any one of claims 1 to 15, wherein
the container main body has a trunk and a top part,
the sheet member container includes a spout disposed in the top part,
the spout has a cylinder part having a pouring outlet, and a flange part protruding outward from a base end of the cylinder part, and
the protective cover covers the top part including at least a circumferential part of the flange part.

17. The sheet member container according to claim 16, wherein in the protective cover, printing is formed on an entire surface of a part covering a part other than the flange part in a part covering the top part.

18. The sheet member container according to any one of claims 1 to 17, wherein
the container main body has a trunk and a bottom part,
the filled part includes a bottom part filled part disposed at the bottom part, and
the protective cover covers the entire bottom part filled part.

19. The sheet member container according to any one of claims 1 to 18, comprising an extending part composed of a part of the main body-forming sheet member and extending from the container main body, wherein
the extending part is pressed from an outside by the protective cover so as to be disposed along an outer surface of the container main body.

20. The sheet member container according to claim 19, comprising a sealing sealed portion in which the outer film layer and the inner film layer are attached to each other at a boundary between the extending part and the filled part, wherein
the extending part has a notch extending toward the filled part across the sealing sealed portion.

21. The sheet member container according to claim 19, wherein
the extending part has:
a communication area communicating with the filled part inside the extending part; and
a notch extending toward the communication area.

22. The sheet member container according to any one of claims 19 to 21, wherein
the container main body has a trunk and a top part,
the sheet member container includes a spout disposed in the top part,
the spout has a cylinder part having a pouring outlet, and a flange part protruding outward from a base end of the cylinder part,
the extending part covers the top part, and
the cylinder part protrudes through an opening part formed in the extending part.

23. The sheet member container according to claim 22, wherein
the trunk has a first main surface part and a second main surface part facing each other with the containing portion interposed therebetween,
the container main body has a bottom part,
the extending part extends from a boundary part between the trunk and the top part, and is wound along outer surfaces of the first main surface part, the bottom part, the second main surface part, and the top part.

24. The sheet member container according to claim 22, comprising a second extending part composed of a part of the main body-forming sheet member and extending from the container main body, wherein
the second extending part and the extending part extend from the same position of the container main body, and
the second extending part covers the trunk.

25. The sheet member container according to any one of claims 1 to 24, further comprising an inner bag disposed inside the container main body, wherein
the inner bag is composed of an inner bag-forming sheet member which is an innermost layer sheet member among the one or more sheet members,
the container main body has an outside air introducing part that introduces outside air between an inner surface of the container main body and an outer surface of the inner bag, and
the outside air introducing part is covered with the protective cover.

26. The sheet member container according to claim 25, wherein the outside air introducing part is a through hole penetrating the outer film layer and the inner film layer.

27. The sheet member container according to claim 25 or 26, wherein
an inner surface of the protective cover is in contact with an outer surface of the filled part,
there is a gap between the inner surface of the protective cover and an area where the outside air introducing part is formed in the container main body,
a wrinkle is formed in the filled part,
an air flow path is formed between the inner surface of the protective cover and the outer surface of the filled part at a position where the wrinkle is formed, and
the gap between the inner surface of the protective cover and the area where the outside air introducing part is formed in the container main body communicates with an external space of the sheet member container through the flow path.

28. The sheet member container according to any one of claims 25 to 27, wherein
a perforation for breaking the protective cover is formed in the protective cover, and
a slit of the perforation is formed at a position corresponding to the outside air introducing part.

29. The sheet member container according to any one of claims 1 to 28, wherein
printing is formed on the protective cover, and
printing is not formed on the plurality of sheet members.

30. The sheet member container according to claim 29, wherein only manufacturing lot information is printed on the main body-forming sheet member without using ink.

31. The sheet member container according to any one of claims 1 to 28, wherein
printing is formed on the protective cover, and
only manufacturing lot information is printed on the plurality of sheet members.

32. The sheet member container according to any one of claims 1 to 31, wherein the protective cover is a shrink label, a wound label, or a stretch label.

33. A method for recycling the sheet member container according to any one of claims 1 to 32, the method comprising:
separating the protective cover from the plurality of sheet members;
washing the plurality of sheet members;
manufacturing a recycled resin using the plurality of washed sheet members;
washing the protective cover; and
manufacturing a recycled resin using the washed protective cover.
